# EUROPÄISCHE PATENTANMELDUNG

(11) **EP 4 177 636 A1**
(43) Veröffentlichungstag der Anmeldung: **10.05.2023**
(21) Anmeldenummer: 21206246.7
(22) Anmeldetag: 03.11.2021
(51) Int. Cl.: G01S 13/93, E05F 15/43, G01S 13/931

(54) **SICHERHEITSLEISTE FÜR EINE TÜR UND VERFAHREN ZUM BETREIBEN EINER SICHERHEITSLEISTE**

(71) Anmelder: Hübner GmbH & Co. KG, 34123 Kassel (DE)
(72) Erfinder: Burhenn, Marcel, 37247 Großalmerode (DE); Franz, Frederik, 34121 Kassel (DE); Hübsch, Daniel, 34277 Fuldabrück (DE)

(57) **Zusammenfassung**

Die Erfindung betrifft eine Sicherheitsleiste für eine Tür, insbesondere für eine Tür eines Transportmittels. Die Sicherheitsleiste ist elastisch und/oder flexibel, weist zumindest einen Aufnahmeraum auf und umfasst eine Sensoranordnung. Die Sensoranordnung ist eingerichtet, elektromagnetische Strahlung in einen Überwachungsbereich zu senden und von dem Überwachungsbereich zu empfangen. Die Sensoranordnung ist so in dem Aufnahmeraum angeordnet, dass die Sicherheitsleiste die Sensoranordnung zumindest in einer Ebene vollständig umschließt.

## Beschreibung

### TECHNISCHES GEBIET

Die Erfindung betrifft eine Sicherheitsleiste für eine Tür, insbesondere für eine Tür eines Transportmittels. Weiterhin betrifft die Erfindung eine Tür mit der Sicherheitsleiste sowie ein Transportmittel mit der Tür. Weiterhin betrifft die Erfindung ein Verfahren zum Betreiben eines Sicherheitselements.

### TECHNISCHER HINTERGRUND

Sicherheitsleisten für Türen von Transportmitteln sind aus dem Stand der Technik bekannt. Die Sicherheitsleisten dienen zur Abdichtung zwischen einer Tür und einem Rahmen oder zwischen zwei Türen. Sicherheitsleisten können auch als Sicherheitsprofilleisten bezeichnet werden. Weiterhin können Sicherheitsleisten ein Einklemmen von Objekten, beispielsweise von Menschen oder Gegenständen, zwischen der Tür und dem Rahmen oder zwischen zwei Türen verhindern oder eine Wahrscheinlichkeit eines Einklemmens reduzieren. Dazu können Sicherheitsleisten bspw. eine Kontaktleiste umfassen, die ein Signal erzeugt, wenn die Sicherheitsleiste auf eine vordefinierte Weise verformt wird. Die Verformung der Sicherheitsleiste kann beispielsweise durch einen Arm einer Person verursacht werden, der zwischen der sich schließenden Tür und dem Rahmen oder zwischen zwei Türen eingeklemmt ist. Durch das Signal kann ein weiteres Schließen der Tür unterbrochen werden, um eine Verletzung der Person zu vermeiden.

Darüber hinaus ist der Einsatz von Lichtgitteranordnungen bekannt, durch die ein Objekt zwischen der Tür und dem Rahmen oder zwischen zwei Türen erkannt werden kann. Oft umfasst eine Lichtgitteranordnung eine Sendeeinheit und eine Empfangseinheit. Die Sendeeinheit kann in dem Rahmen vorgesehen sein und die Empfangseinheit kann in der Tür angeordnet sein. Wird der Empfang des von der Sendeinheit ausgesendeten Lichts durch ein Objekt unterbrochen, kann die Lichtgitteranordnung ein Signal erzeugen, durch das ein Schließen der Tür abgebrochen werden kann.

Die Objekterkennung durch Kontaktleisten und/oder Lichtgitteranordnungen ist in mehreren Aspekten begrenzt. Zusätzlich sind insbesondere die Sendeeinheit und die Empfangseinheit der Lichtgitteranordnungen in Richtung des Überwachungsraums geöffnet, wodurch diese anfällig für Beschädigungen, beispielsweise durch Vandalismus, sind.

### ZUSAMMENFASSUNG DER OFFENBARUNG

Der Erfindung liegt daher die Aufgabe zu Grunde eine Sicherheitsleiste bereitzustellen, durch die eine Objekterkennung verbessert wird. Eine weitere Aufgabe der Erfindung liegt darin, eine Sicherheitsleiste bereitzustellen, durch die eine erhöhte Sicherheit gewährleistet wird. Eine noch weitere Aufgabe liegt darin, eine Sicherheitsleiste bereitzustellen, die vor einer Beschädigung geschützt ist. Eine noch weitere Aufgabe liegt darin, eine Sicherheitsleiste bereitzustellen, die einfach und kostengünstig herstellbar und/oder austauschbar ist.

Zumindest eine der Aufgaben wird durch die Gegenstände der unabhängigen Ansprüche gelöst. Weiterbildungen der Erfindung sind in den abhängigen Ansprüchen definiert.

Angegeben ist eine Sicherheitsleiste für eine Tür, bevorzugt für eine Tür eines Transportmittels. Die Sicherheitsleiste ist elastisch und/oder flexibel. Die Sicherheitsleiste weist zumindest einen Aufnahmeraum auf. Die Sicherheitsleiste umfasst eine Sensoranordnung. Die Sensoranordnung ist eingerichtet, elektromagnetische Strahlung in einen Überwachungsbereich zu senden und von dem oder aus dem Überwachungsbereich zu empfangen. Die Sensoranordnung ist so in dem Aufnahmeraum angeordnet, dass die Sicherheitsleiste die Sensoranordnung zumindest in einer Ebene vollständig umschließt.

Durch das Aussenden elektromagnetischer Strahlung in den Überwachungsraum und das Empfangen elektromagnetischer Strahlung ausgehend von dem Überwachungsraum lässt sich der Überwachungsraum gut überwachen und eine Objekterkennung in dem Überwachungsraum ist verbessert. In dem Aufnahmeraum kann die Sensoranordnung geschützt angeordnet sein. Weiterhin kann die Sensoranordnung einfach an einer Tür, z.B. an eine Tür eines Transportmittels, angebracht werden. Hierzu ist lediglich die Sicherheitsleiste der Tür auszutauschen. Somit ist eine einfache und kostengünstige Nachrüstmöglichkeit für bestehende Türen gegeben.

Die Sicherheitsleiste kann nicht-starr, flexibel und/oder elastisch sein. Insbesondere ist die Sicherheitsleiste als Profil ausgebildet und wird als Sicherheitsprofilleiste bereitgestellt. Die Sicherheitsleiste kann zu einer Abdichtung zwischen der Tür und einem Rahmen oder zwischen der Tür und einer weiteren Tür beitragen oder eine Abdichtung bewirken.

Die Sicherheitsleiste kann für ein bewegliches Element vorgesehen sein. Beispielsweise ist die Sicherheitsleiste für eine Tür oder ein Fenster vorgesehen.

Allgemein kann die Tür eine Drehschwenktür, eine Drehtür, eine Falttür, eine Schiebetür, eine Schwenkschiebetür, eine Innenschwenktür oder eine Außenschwingtür sein. Die Tür kann ebenso für ein Gebäude eingerichtet sein oder in einem Gebäude installiert sein.

Das Transportmittel kann allgemein ein Fahrzeug, bevorzugt ein Nutzfahrzeug oder ein Personenfahrzeug, sein. Das Transportmittel kann ein PKW, ein LKW, ein Bus, ein autonom fahrendes Fahrzeug oder Schuttle, oder ein Zug sein. Das Transportmittel kann ein Fahrstuhl, ein Flugzeug oder eine Gondel, z.B. eine Seilbahngondel, sein.

Die Sicherheitsleiste kann eingerichtet sein, mindestens ein Objekt, z.B. eine Person oder ein Gegenstand, in dem Überwachungsraum zu erkennen. Alternativ oder zusätzlich kann die Sicherheitsleiste eingerichtet sein, ein Signal zu erzeugen, wenn ein Objekt in dem Überwachungsraum erkannt wird. Auf Grundlage des Signals kann beispielsweise eine Steuerung der Tür verändert werden.

Der Überwachungsbereich oder Überwachungsraum kann ein Einstiegs- und/oder Ausstiegsbereich oder -raum sein. Der Überwachungsbereich kann zumindest teilweise in einem Transportmittel und/oder außerhalb eines Transportmittels liegen. Der Überwachungsbereich kann ein Volumen von zumindest 0,01 m³, bevorzugt zumindest 0,1 m³, bevorzugter zumindest 0,5 m³, bevorzugter zumindest 1,0 m³, aufweisen.

Der Überwachungsbereich kann sich senkrecht zu einer von der Tür definierten Ebene über eine Strecke von zumindest 0,1 m, bevorzugt zumindest 0,5 m, bevorzugter zumindest 1,0 m, bevorzugter zumindest 2,0 m, bevorzugter zumindest 3,0 m, erstrecken.

Die Sensoranordnung kann eine (einzige Einheit) bilden. Beispielsweise kann die Sensoranordnung ein Gehäuse umfassen. Alle Komponenten der Sensoranordnung können in dem Gehäuse angeordnet sein. Alle Komponenten der Sensoranordnung können in dem Aufnahmeraum der Sicherheitsleiste angeordnet sein. Die Sensoranordnung kann ein Sensor sein.

Die Sicherheitsleiste kann aus (genau) einem Material bestehen. Alternativ kann die Sicherheitsleiste mehrere verschiedene Materialien, z.B. zumindest zwei verschiedene Materialien oder zumindest drei verschiedene Materialien, umfassen. Die Sicherheitsleiste kann ein Elastomer oder einen Gummi umfassen. Die Sicherheitsleiste kann aus einem Elastomer oder einem Gummi bestehen. Die Sicherheitsleiste kann unterschiedliche Elastomere oder unterschiedliche Gummis umfassen oder daraus bestehen. Beispielsweise kann die Sicherheitsleiste ein Silikon oder EPDM umfassen oder daraus bestehen.

Die Sicherheitsleiste kann zumindest abschnittsweise, insbesondere vollständig, opak sein. Die Sicherheitsleiste kann zumindest abschnittsweise, insbesondere vollständig, für Licht in einem von einem Menschen sichtbaren Wellenlängenbereich (etwa 380 nm bis etwa 780 nm) undurchlässig sein. Beispielsweise ist die Sicherheitsleiste schwarz. Die Sicherheitsleiste kann ein Farbadditiv, bevorzugt Kohlenstoff, umfassen.

Die Sicherheitsleiste kann durch Extrusion oder Co-Extrusion hergestellt sein oder herstellbar sein.

Die Sensoranordnung kann elektromagnetische Strahlung in den Überwachungsbereich senden, die elektromagnetische Strahlung kann in dem Überwachungsbereich reflektiert werden, beispielsweise durch Objekte in dem Überwachungsraum, und die reflektierte elektromagnetische Strahlung kann von der Sensoranordnung empfangen werden. Auf Grundlage der elektromagnetischen Strahlung, insbesondere auf Grundlage der empfangenen oder reflektierten elektromagnetischen Strahlung, kann die Sensoranordnung ermitteln, ob sich ein Objekt in dem Überwachungsbereich befindet.

Allgemein kann die elektromagnetische Strahlung auch als elektromagnetische Wellen bezeichnet werden.

Die elektromagnetische Strahlung kann durch die Sicherheitsleiste hindurch gesendet werden. Alternativ oder zusätzlich kann die elektromagnetische Strahlung durch die Sicherheitsleiste hindurch empfangen werden. Die elektromagnetische Strahlung kann beim Empfangen und/oder Senden das Material der Sicherheitsleiste passieren.

Die Sensoranordnung kann so in dem Aufnahmeraum angeordnet sein, dass die elektromagnetische Strahlung die Sicherheitsleiste bzw. das Material der Sicherheitsleiste passiert, bevorzugt wenn die elektromagnetische Strahlung durch die Sensoranordnung empfangen und/oder gesendet wird.

Die Sensoranordnung kann so in dem Aufnahmeraum angeordnet sein, dass zumindest 25 % der Oberfläche der Sensoranordnung von der Sicherheitsleiste bzw. von dem Material der Sicherheitsleiste umgeben ist. Bevorzugt ist die Sensoranordnung so in dem Aufnahmeraum angeordnet, dass zumindest 35 %, bevorzugter zumindest 50 %, bevorzugter zumindest 60 %, bevorzugter zumindest 75 %, bevorzugter zumindest 90 %, bevorzugter zumindest 95 %, bevorzugter zumindest 97 %, bevorzugter zumindest 99 %, der Oberfläche der Sensoranordnung von der Sicherheitsleiste bzw. dem Material der Sicherheitsleiste umgeben ist.

Zumindest ein Abschnitt der Sicherheitsleiste bzw. eines Materials der Sicherheitsleiste, den elektromagnetische Strahlung passiert, um durch die Sensoranordnung empfangen und/oder gesendet zu werden, kann die Sensoranordnung umgeben.

Die Ebene, in der die Sensoranordnung von der Sicherheitsleiste vollständig umschlossen ist, kann senkrecht zu einer von der Tür definierten Ebene orientiert sein. Die Sicherheitsleiste kann die Sensoranordnung in mehreren Ebenen, z.B. in zumindest zwei Ebenen, zumindest drei Ebenen, zumindest fünf Ebenen oder zumindest zehn Ebenen, vollständig umschließen. Die mehreren Ebenen können parallel zueinander sein und bevorzugt zumindest 1 mm, 5 mm oder 10 mm voneinander beabstandet sein. Alternativ können die mehreren Ebenen nicht-parallel zueinander sein und zwischen jeweils zwei der Ebenen kann ein Winkel von 5 °, 10 ° oder 20 ° gebildet sein.

Die Sicherheitsleiste bzw. das Material der Sicherheitsleiste kann die Sensoranordnung im Wesentlichen vollständig umgeben. Durch das im Wesentlichen kann eine oder mehrere Datenleitungen, Signalleitung und/oder Energieversorgungsleitungen ausgenommen sein. Die Sicherheitsleiste bzw. das Material der Sicherheitsleiste kann die Sensoranordnung vollständig umgeben, wobei Datenleitungen, Signalleitung und/oder Energieversorgungsleitungen ausgenommen sein können. D.h., dass Datenleitungen, Signalleitung und/oder Energieversorgungsleitungen nicht (vollständig) von der Sicherheitsleiste umgeben sein müssen, wenn die Sensoranordnung vollständig von der Sicherheitsleiste umgeben ist.

Der Aufnahmeraum kann kanalförmig ausgebildet sein. Der Aufnahmeraum kann höchstens zweiseitig, insbesondere höchstens einseitig geöffnet sein. Eine Öffnung oder Öffnungen des Aufnahmeraums können durch ein Verschlusselement verschlossen sein.

Die Sensoranordnung kann eine RADAR- Sensoranordnung sein. RADAR ist eine Abkürzung für funkgestützte Ortung und Abstandsmessung (engl. radio detection and ranging).

Die Sensoranordnung kann ein Dauerstrichradar sein oder eine Dauerstrichradar-Sensoranordnung sein. Das Dauerstrichradar kann unmoduliert oder moduliert sein. Bevorzugt ist die Sensoranordnung eine FMCW-RADAR-Sensoranordnung oder eine CW-RADAR-Sensoranordnung. FMCW ist eine Abkürzung für frequency modulated continuous wave. CW ist eine Abkürzung für continuous wave. Die Sensoranordnung kann eingerichtet sein, basierend auf FMCW oder CW zu arbeiten.

Die Sensoranordnung kann eine M-Sequenz-RADAR-Sensoranordnung sein. Die Sensoranordnung kann eingerichtet sein, basierend auf M-Sequenz zu arbeiten.

Die Sensoranordnung kann eine Impulsmodulations-RADAR-Sensoranordnung sein. Die Sensoranordnung kann eingerichtet sein, basierend auf Impulsmodulation zu arbeiten.

Die Sensoranordnung kann eingerichtet sein, elektromagnetische Strahlung im Radiofrequenzbereich in den Überwachungsbereich zu senden und/oder von dem Überwachungsbereich zu empfangen.

Die elektromagnetische Strahlung kann eine Frequenz zwischen 30 kHz und 3000 GHz aufweisen. Bevorzugt weist die elektromagnetische Strahlung eine Frequenz zwischen 1 MHz und 3000 GHz, bevorzugter zwischen 1 MHz und 300 GHz, bevorzugter zwischen 6 MHz und 300 GHz, bevorzugter zwischen 1 GHz und 300 GHz, bevorzugter zwischen 59 GHz und 62 GHz, auf. Die elektromagnetische Strahlung kann eine Frequenz zwischen 1 GHz und 40 GHz aufweisen.

Die Sensoranordnung kann eingerichtet sein, elektromagnetische Strahlung in den Überwachungsbereich mit einer Leistung von weniger als 1,0 W zu senden. Bevorzugt ist die Sensoranordnung eingerichtet, elektromagnetische Strahlung in den Überwachungsbereich mit einer Leistung von weniger als von weniger als 100 mW, bevorzugter von weniger als 10 mW, bevorzugter zwischen 0,1 mW und 10 mW, bevorzugter zwischen 1 mW und 10 mW, zu senden.

Die Sensoranordnung kann eingerichtet sein, elektromagnetische Strahlung in einem ISM-Band (ISM: industrial, scientific and medical band) zu senden und/oder zu empfangen. Ein ISM-Band kann ein Frequenzbereich sein, der durch Hochfrequenz-Geräte in Industrie, Wissenschaft, Medizin, in häuslichen und/oder ähnlichen Bereichen lizenzfrei und meist genehmigungsfrei genutzt werden kann.

Die Sensoranordnung kann zumindest eine Antenne umfassen. Die Antenne kann eingerichtet sein, elektromagnetische Strahlung in den Überwachungsbereich zu senden und/oder von dem Überwachungsbereich zu empfangen. Bevorzugt ist die Antenne eingerichtet, elektromagnetische Strahlung in den Überwachungsbereich zu senden und von dem Überwachungsbereich zu empfangen.

Die Sensoranordnung kann zumindest eine erste Antenne und zumindest eine zweite Antenne umfassen. Die erste Antenne kann eingerichtet sein, elektromagnetische Strahlung in den Überwachungsbereich zu senden. Die zweite Antenne kann eingerichtet sein, elektromagnetische Strahlung von dem Überwachungsbereich zu empfangen. Die Sensoranordnung kann zumindest eine erste Antenne und zumindest zwei zweite Antennen umfassen.

Bevorzugt umfasst die Sensoranordnung drei Antennen, die eingerichtet sind, elektromagnetische Strahlung in den Überwachungsbereich zu senden. Alternativ oder zusätzlich kann die Sensoranordnung vier Antennen umfassen, die eingerichtet sind, elektromagnetische Strahlung von dem Überwachungsbereich zu empfangen.

Jede der Antennen kann eingerichtet sein, elektromagnetische Strahlung zu senden und zu empfangen. Das Senden und das Empfangen ist bevorzugt zeitversetzt oder zeitlich beabstandet. Alternativ kann jede der Antennen eingerichtet sein, elektromagnetische Strahlung nur (d.h. ausschließlich) zu senden oder nur (d.h. ausschließlich) zu empfangen. Beispielsweise können erste Antennen eingerichtet sein, elektromagnetische Strahlung nur (d.h. ausschließlich) zu senden. Zweite Antennen können eingerichtet sein, elektromagnetische Strahlung nur (d.h. ausschließlich) zu empfangen.

Die Sensoranordnung kann zumindest zwei Antennen umfassen, die eingerichtet sind, elektromagnetische Strahlung zu senden. Die zwei Antennen können voneinander beabstandet in der Sensoranordnung angeordnet sein. Der Abstand (auch als Sendeantennenabstand bezeichnet) kann zwischen 0,6 und 1,5, bevorzugt zwischen 0,7 und 1,4, bevorzugter zwischen 0,8 und 1,3, bevorzugter zwischen 0,9 und 1,1, bevorzugter zwischen 0,95 und 1,05, bevorzugter 1,0, der Wellenlänge der elektromagnetischen Strahlung betragen. Die Sensoranordnung kann zumindest drei Antennen umfassen, die eingerichtet sind, elektromagnetische Strahlung zu senden. Zwischen der ersten der drei Antennen und der dritten der drei Antennen kann der Sendeantennenabstand vorliegen. Alternativ oder zusätzlich kann der Sendeantennenabstand zwischen der zweiten der drei Antennen und der dritten der drei Antennen vorliegen.

Die Sensoranordnung kann zumindest zwei Antennen umfassen, die eingerichtet sind, elektromagnetische Strahlung zu empfangen. Die zwei Antennen können voneinander beabstandet in der Sensoranordnung angeordnet sein. Der Abstand (auch als Empfangsantennenabstand bezeichnet) kann zwischen 0,1 bis 0,9, bevorzugt zwischen 0,2 und 0,8, bevorzugter zwischen 0,3 und 0,7, bevorzugter zwischen 0,4 und 0,6, bevorzugter zwischen 0,45 und 0,55, bevorzugter 0,5, der Wellenlänge der elektromagnetischen Strahlung betragen. Die Sensoranordnung kann zumindest vier Antennen umfassen, die eingerichtet sind, elektromagnetische Strahlung zu senden. Zwischen der ersten der vier Antennen und der dritten der vier Antennen kann der Empfangsantennenabstand vorliegen. Alternativ oder zusätzlich kann zwischen der dritten der vier Antennen und der vierten der vier Antennen der Empfangsantennenabstand vorliegen. Alternativ oder zusätzlich kann zwischen der vierten der vier Antennen und der zweiten der vier Antennen der Empfangsantennenabstand vorliegen. Alternativ oder zusätzlich kann zwischen der zweiten der vier Antennen und der ersten der vier Antennen der Empfangsantennenabstand vorliegen. Zwischen jeweils zwei der vier Antennen kann jeweils der Empfangsantennenabstand vorliegen.

Die Sicherheitsleiste kann einen Befestigungsabschnitt aufweisen. Durch den Befestigungsabschnitt kann die Sicherheitsleiste mit der Tür kraftschlüssig und/oder formschlüssig verbindbar sein. Die Sicherheitsleiste kann lösbar mit der Tür verbindbar sein.

Die Tür kann eine Befestigungsaufnahme aufweisen. Die Befestigungsaufnahme kann so ausgebildet sein, dass der Befestigungsabschnitt der Sicherheitsleiste in die Befestigungsaufnahme einbringbar ist, um die Sicherheitsleiste kraftschlüssig und/oder formschlüssig mit der Tür zu verbinden.

Die Sicherheitsleiste kann eine Kontaktleiste, insbesondere eine elektrische Kontaktleiste, umfassen. Alternativ oder zusätzlich kann die Sicherheitsleiste eine Lichtgitteranordnung umfassen.

Die Kontaktleiste kann ein Kontaktsignal ausgeben, welches zur Ansteuerung der Lichtquelle verwendet wird. Die Kontaktleiste kann in einem Kontaktbereich der Sicherheitsleiste mit einem Rahmen oder im Kontaktbereich der Sicherheitsleiste mit einer anderen Tür angeordnet sein. Dadurch lässt sich einfach ein mechanischer Kontakt mit der anderen Tür dem Rahmen oder einem Objekt erkennen. Die Kontaktleiste ist vorzugsweise in einem umschlossenen Hohlraum oder Aufnahmeraum der Sicherheitsleiste angeordnet, der bei elastischer Verformung eine Ausgabe des Kontaktsignals durch die Kontaktleiste bewirkt.

Die Lichtgitteranordnung kann eingerichtet sein, ein Objekt in einem Überwachungsbereich zu erkennen. Der Überwachungsbereich kann gleich oder unterschiedlich zu dem Überwachungsbereich der Sensoranordnung sein. Die Lichtgitteranordnung kann eingerichtet sein, Licht, insbesondere von einem Menschen nicht sichtbares Licht, in den Überwachungsbereich zu senden und/oder von dem Überwachungsbereich zu empfangen. Die Lichtgitteranordnung kann in einem Hohlraum oder einer Aufnahme in der Sicherheitsleiste angeordnet sein.

Die Sensoranordnung, die Kontaktleiste und/oder die Lichtgitteranordnung können mit einer Türsteuerung verbunden sein. Die Sensoranordnung, die Kontaktleiste und/oder die Lichtgitteranordnung können eingerichtet sein, jeweils ein Signal zu erzeugen und an die Türsteuerung zu übertragen. Auf Grundlage des einen oder der mehreren Signale kann die Steuerung der Tür, insbesondere die Bewegung der Tür, verändert werden.

Die Sicherheitsleiste kann eine um ein Vielfaches größere Länge als Breite aufweisen. Das Vielfache kann zumindest zwei, bevorzugt zumindest fünf, bevorzugter zumindest zehn, bevorzugter zumindest zwanzig, sein. Die Sensoranordnung kann von einem Ende der Sicherheitsleiste in Längsrichtung höchstens 40 %, bevorzugt höchstens 35 %, bevorzugter höchstens 30 %, bevorzugter höchstens 25 %, bevorzugter höchstens 20 %, bevorzugter höchstens 15 %, bevorzugter höchstens 10 %, bevorzugter höchstens 5 %, der Gesamtlänge der Sicherheitsleiste entfernt angeordnet sein. Die Längsrichtung kann sich entlang der Längenrichtung erstrecken.

Die Sicherheitsleiste kann eine Länge von zumindest 0,5 m, bevorzugt zumindest 1,0 m, bevorzugter zumindest 1,5 m, bevorzugter zumindest 2,0 m, bevorzugter zumindest 2,5 m, aufweisen.

In der Regel ist die Sicherheitsleiste vertikal (in Gravitationsrichtung) an der Tür installiert oder installierbar. Die Sensoranordnung kann in einem oberen Bereich angeordnet sein. Ein Abstand zum oberen Ende der Sicherheitsleiste kann höchstens 40 %, bevorzugt höchstens 35 %, bevorzugter höchstens 30 %, bevorzugter höchstens 25 %, bevorzugter höchstens 20 %, bevorzugter höchstens 15 %, bevorzugter höchstens 10 %, bevorzugter höchstens 5 %, der Gesamtlänge der Sicherheitsleiste betragen.

Die Sensoranordnung kann die elektromagnetische Strahlung nach unten (in Gravitationsrichtung) aussenden. Das Aussenden kann gegenüber der Richtung nach unten abgewinkelt sein.

Die Sicherheitsleiste kann einen Controller umfassen. Der Controller kann eine Steuer- und/oder Auswerteeinheit sein. Der Controller kann eingerichtet sein, auf Grundlage der empfangenen elektromagnetischen Strahlung zu ermitteln, ob sich mindestens ein Objekt in dem Überwachungsbereich befindet. Insbesondere umfasst die Sensoranordnung den Controller.

Alternativ kann der Controller außerhalb der Sicherheitsleiste angeordnet sein. Die Sensoranordnung kann Signale, basierend auf der empfangenen elektromagnetischen Strahlung, an den Controller übertragen. Der Controller kann auf Grundlage der Signale ermitteln, ob sich ein Objekt in dem Überwachungsbereich befindet. Die Übertragung kann drahtlos oder drahtgebunden sein.

Der Controller kann eingerichtet sein, ein auf der empfangenen elektromagnetischen Strahlung basierendes Signal zu bearbeiten, zu verarbeiten und/oder auszuwerten. Das Signal kann die Gesamtheit aller durch die Sensoranordnung erhaltenen Größen umfassen oder sein. Beispielsweise kann das Signal alle von den Antennen empfangenen Größen umfassen. Insbesondere können ein oder mehrere Filter auf das Signal angewendet werden. Durch einen Filter kann beispielsweise ein Hintergrundsignal abgezogen oder herausgerechnet werden.

Durch die Bearbeitung kann das Signal verändert werden. Insbesondere wird durch die Verarbeitung das Signal für eine (nachgelagerte) Weiterverarbeitung des Signals oder Auswertung des Signals verändert.

Der Controller kann eingerichtet sein, einen Ort und/oder eine Geschwindigkeit und/oder eine Bewegungsrichtung des Objekts auf Grundlage der empfangenen elektromagnetischen Strahlung in dem Überwachungsbereich oder auf Grundlage des bearbeiteten, verarbeiteten und/oder ausgewerteten Signals zu ermitteln. Die Geschwindigkeit kann eine relative Geschwindigkeit zwischen der Sensoranordnung und dem Objekt sein. Der Ort kann durch einen Abstand zwischen der Sensoranordnung und dem Objekt und einer Richtung ermittelbar sein. Die Richtung kann durch einen Punkt und einen oder zwei Winkel festgelegt oder definiert sein.

Bevorzugt ist die Sensoranordnung oder der Controller eingerichtet, sowohl den Ort als auch die Geschwindigkeit eines im Überwachungsraum befindlichen Objekts zu ermitteln. Zusätzlich kann die Sensoranordnung oder der Controller eingerichtet sein, eine Bewegungsrichtung des Objekts zu ermitteln.

Der Controller kann eingerichtet sein, das auf der empfangenen elektromagnetischen Strahlung basierende Signal nach Zwischeninformationen aufzulösen. Die Zwischeninformationen können eine Distanz, einen Winkel, eine Geschwindigkeit und/oder eine Signalstärke umfassen. Ebenso können die Zwischeninformationen weitere Größen, insbesondere abstrahierte Größen, umfassen, die eine Klassifikation von Objekten erlauben.

Der Controller kann eingerichtet sein, das Objekt auf Grundlage der elektromagnetischen Strahlung und/oder auf Grundlage des bearbeiteten, verarbeiteten und/oder ausgewerteten Signals zu klassifizieren. Klassen der Klassifikation können beispielsweise ein Typ, ein Zustand und/oder eine Relevanz sein. Jede der Klassen kann in zumindest zwei Unterklassen eingeteilt werden. Beispielsweise kann die Klasse "Typ" eingeteilt werden in ["Person", "Tür"]. Die Klasse "Zustand" kann beispielsweise eingeteilt werden in ["bewegt sich auf Tür zu", "bewegt sich von Tür weg", "bewegt sich nicht"]. Die Klasse "Relevanz" kann beispielsweise eingeteilt werden in ["relevant", "nicht relevant"].

Der Controller kann eingerichtet sein, das Objekt auf Grundlage der elektromagnetischen Strahlung und/oder auf Grundlage des bearbeiteten, verarbeiteten und/oder ausgewerteten Signals zu separieren. Beispielsweise können von dem Controller mehrere Objekte auf Grundlage der elektromagnetischen Strahlung und/oder auf Grundlage des bearbeiteten, verarbeiteten und/oder ausgewerteten Signals identifiziert werden. Der Controller kann eingerichtet sein, die (identifizierten) Objekte zu unterscheiden oder zu trennen.

Der Controller kann eingerichtet sein, das auf der empfangenen elektromagnetischen Strahlung basierende Signal auszuwerten oder zu analysieren. Beispielsweise kann der Controller eingerichtet sein, ein Szenario auf Grundlage des auf der empfangenen elektromagnetischen Strahlung basierenden Signals zu ermitteln oder zu bestimmen oder zu interpretieren.

Bevorzugt ist der Controller eingerichtet, auf Grundlage des Signals, der Zwischeninformationen und/oder der Klassifikation das Szenario zu interpretieren. Beispielsweise kann der Controller eingerichtet sein festzustellen, ob sich eine Person (auch als Passagier bezeichnet) einer sich schließenden Tür nähert. Dabei kann der Controller ermitteln, ob die Person (voraussichtlich) zwischen der Tür und einem Rahmen oder zwischen der Tür und einer weiteren Tür eingeklemmt wird.

Der Controller kann eingerichtet sein, auf Grundlage der elektromagnetischen Strahlung und/oder auf Grundlage des bearbeiteten Signals und/oder auf Grundlage der Klassifikation und/oder auf Grundlage der Klassifikation und/oder auf Grundlage eines Zustands der Tür ein Signal zu erzeugen. Durch das erzeugte Signal kann ein Betrieb der Tür veränderbar sein. Bevorzugt ist durch das Signal eine Bewegung der Tür veränderbar. Bevorzugter ist durch das Signal ein Schließvorgang der Tür unterbrechbar oder abbrechbar.

Bevorzugt ist der Zustand der Tür, insbesondere der Öffnungs- und/oder Schließzustand der Tür, eine Einflussgröße bei der Erzeugung des Signals. Wenn sich eine Person oder ein anderes Objekt auf eine sich schließende Tür zu bewegt und die Tür weit geöffnet ist, kann von dem Controller ermittelt werden, dass ein Abbruch des Schließvorgangs nicht notwendig ist. Ist hingegen die Tür wenig geöffnet, beispielsweise weil der Schließvorgang beinahe abgeschlossen ist, kann der Controller ermitteln, dass der Schließvorgang abzubrechen ist, da ein Einklemmen der Person zwischen der Tür und dem Rahmen oder der Tür und einer anderen Tür bevorsteht oder droht.

Der Controller kann eingerichtet sein, einen oder mehrere Algorithmen zu verwenden, bevorzugt bevor das Signal erzeugt wird. Insbesondere kann der Controller eingerichtet sein, einen oder mehrere Algorithmen zur Auswertung des auf der elektromagnetischen Strahlung basierenden Signal anzuwenden. Ein Algorithmus kann eingerichtet sein, von Daten zu lernen. Beispielsweise kann maschinelles Lernen (machine learning) auf den Algorithmus angewendet werden. Insbesondere wird supervised machine learning, unsupervised machine learning und/oder reinforcement learning auf den Algorithmus angewendet.

Angegeben ist ein Verfahren zum Betreiben einer Sicherheitsleiste für eine Tür, insbesondere für eine Tür eines Transportmittels. Die Sicherheitsleiste umfasst eine Sensoranordnung, die in einem Aufnahmeraum der Sicherheitsleiste angeordnet ist und zumindest in einer Ebene vollständig von der Sicherheitsleiste umschlossen ist. Das Verfahren umfasst die Schritte: Senden, durch die Sensoranordnung, von elektromagnetischer Strahlung in einen Überwachungsraum; Empfangen, durch die Sensoranordnung, von elektromagnetischer Strahlung von oder aus dem Überwachungsraum; und Ermitteln, auf Grundlage der empfangenen elektromagnetischen Strahlung, ob sich ein Objekt in dem Überwachungsraum befindet.

Jede hierin offenbarte Sicherheitsleiste kann in dem Verfahren eingesetzt werden. Insbesondere kann jeder hierin offenbarte Verfahrensschritt, beispielsweise jeder Verfahrensschritt, zu dem der Controller eingerichtet ist, in dem Verfahren eingesetzt werden.

Angegeben ist eine Tür mit einer Sicherheitsleiste. Die Tür kann jede hierin offenbarte Sicherheitsleiste umfassen.

Die Sicherheitsleiste kann mit der Tür lösbar verbunden sein. Insbesondere ist die Sicherheitsleiste zumindest abschnittsweise in die Tür eingefügt.

Die Tür kann eine Drehschwenktür, eine Drehtür, eine Falttür, eine Schwenkschiebetür, eine Innenschwenktür oder eine Außenschwingtür sein. Die Tür kann eine automatische Tür, bevorzugt eine halbautomatische oder vollautomatische Tür, sein. Die Tür kann angetrieben werden, beispielsweise von einem Motor, bevorzugt von einem Elektromotor. Die Tür kann ebenso pneumatisch oder hydraulisch antreibbar sein. Durch den Antrieb kann ein Öffnen und/oder Schließen der Tür durchführbar sein.

Angegeben ist eine Türanordnung. Die Türanordnung kann zumindest zwei Türen umfassen.

Angegeben ist ein Transportmittel mit zumindest einer Tür. Das Transportmittel kann zwei Türen umfassen. Jede der Türen kann jede hierin offenbarte Tür sein.

Das Transportmittel kann allgemein ein Fahrzeug, bevorzugt ein Nutzfahrzeug oder ein Personenfahrzeug, sein. Das Transportmittel kann ein PKW, ein LKW, ein Bus oder ein Zug sein. Das Transportmittel kann ein Fahrstuhl, ein Flugzeug oder eine Gondel, z.B. eine Seilbahngondel, sein.

### KURZE BESCHREIBUNG DER FIGUREN

Nachfolgend wird anhand von Figuren die Offenbarung bzw. weitere Ausführungsformen und Vorteile der Offenbarung näher erläutert, wobei die Figuren lediglich Ausführungsbeispiele der Offenbarung beschreiben. Gleiche Bestandteile in den Figuren werden mit gleichen Bezugszeichen versehen.
- Fig. 1a: zeigt eine Türanordnung 1000 in einem ersten Zustand;
- Fig. 1b: zeigt die Türanordnung 1000 in einem zweiten Zustand;
- Fig. 2a: zeigt eine Türanordnung 1000 in einem ersten Zustand;
- Fig. 2b: zeigt die Türanordnung 1000 in einem zweiten Zustand;
- Fig. 3a: zeigt eine Sicherheitsleiste 200 und eine Tür 300 in einem unverbundenen Zustand;
- Fig. 3b: zeigt die Sicherheitsleiste 200 und die Tür 300 in einem verbundenen Zustand;
- Fig. 4: zeigt schematisch eine Sensoranordnung 100;
- Fig. 5a: zeigt eine Türanordnung 1000 in einem ersten Zustand;
- Fig. 5b: zeigt eine Darstellung einer Messung einer Sensoranordnung 100;
- Fig. 5c: zeigt eine Darstellung einer Messung einer Sensoranordnung 100;
- Fig. 5d: zeigt eine Darstellung einer Messung einer Sensoranordnung 100;
- Fig. 6a: zeigt eine Türanordnung 1000 in einem ersten Zustand;
- Fig. 6b: zeigt eine Darstellung einer Messung einer Sensoranordnung 100;
- Fig. 6c: zeigt eine Darstellung einer Messung einer Sensoranordnung 100;
- Fig. 6d: zeigt eine Darstellung einer Messung einer Sensoranordnung 100;
- Fig. 7a: zeigt eine Türanordnung 1000 in einem ersten Zustand;
- Fig. 7b: zeigt eine Darstellung einer Messung einer Sensoranordnung 100;
- Fig. 7c: zeigt eine Darstellung einer Messung einer Sensoranordnung 100;
- Fig. 7d: zeigt eine Darstellung einer Messung einer Sensoranordnung 100;
- Fig. 8a: zeigt einen Überwachungsbereich 900 einer Sensoranordnung 100; und
- Fig. 8b: zeigt einen Überwachungsbereich 900 einer Sensoranordnung 100 und einen Überwachungsbereich 901 einer Sensoranordnung 101.

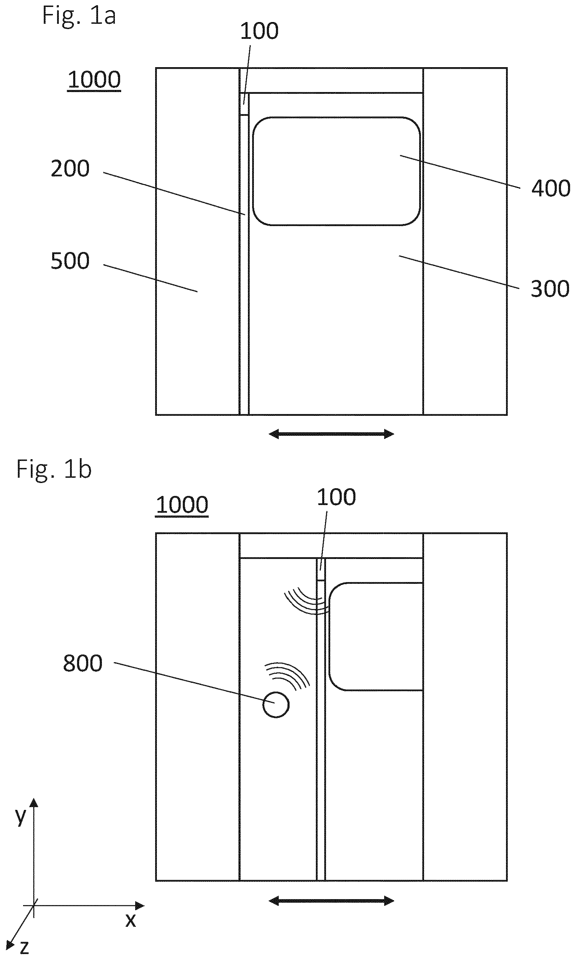

Fig. 1a zeigt eine Türanordnung 1000 in einem ersten Zustand. Die Türanordnung 1000 umfasst eine Tür 300. Die Tür 300 kann eine Tür eines Transportmittels sein, beispielsweise eines Zuges. Die Tür 300 ist einflüglig ausgestaltet. Die Tür 300 kann als Schiebetür ausgestaltet sein, die gegen einen Rahmen 500 läuft. Die Tür 300 umfasst bevorzugt an einer Stirnseite eine Sicherheitsleiste 200, die beim Anschlagen der Tür 300 am Rahmen 500, der beispielsweise ein Alu- oder Stahlprofil ist, (leicht) komprimiert wird. Die Tür 300 weist vorzugsweise eine Glas- oder eine Fensterscheibe 400 auf. Die Tür 300 kann eine x-y-Ebene definieren. Eine z-Richtung kann senkrecht zu der x-y-Ebene orientiert sein.

Die Sicherheitsleiste 200 umfasst eine Sensoranordnung 100. Die Sensoranordnung 100 kann in der oberen Hälfte (in Gravitationsrichtung) der Sicherheitsleiste 200 angeordnet sein. Bevorzugt ist die Sensoranordnung 100 im oberen Drittel oder im oberen Viertel der Sicherheitsleiste 200 angeordnet. Die Sensoranordnung 100 ist zumindest teilweise, insbesondere vollständig, von der Sicherheitsleiste 200 umgeben oder bedeckt. Die Sensoranordnung 100 kann eine RADAR-Sensoranordnung sein.

In Fig. 1a ist die Tür 300 geschlossen, sodass die Sicherheitsleiste 200 an dem Rahmen 500 anliegt. Wenn die Tür 300 geschlossen ist, kann die Sensoranordnung 100 eingerichtet sein, keine Messung durchzuführen.

In Fig. 1b ist die Türanordnung 1000 aus Fig. 1a gezeigt, wobei die Tür 300 teilweise geöffnet ist. Wenn die Tür 300 geöffnet ist, kann die Sensoranordnung 100 eingerichtet sein, eine Messung durchzuführen. Dazu kann die Sensoranordnung 100 elektromagnetische Strahlung in einen Überwachungsbereich senden und elektromagnetische Strahlung aus dem Überwachungsbereich empfangen.

Der Überwachungsbereich ist bevorzugt ein Eingangs- und/oder Ausgangsbereich der Tür 300. Der Überwachungsbereich kann sich senkrecht zu einer von der Tür definierten Ebene (in eine Richtung und/oder in die entgegengesetzte Richtung) über eine Distanz von zumindest 0,1 m oder bis zumindest 3,0 m erstrecken. Dadurch lässt sich der Überwachungsbereich auf Objekte, z.B. Personen oder Gegenstände, überwachen.

Es ist vorgesehen, dass die Sensoranordnung 100 größtenteils oder sogar vollständig in der Sicherheitsleiste 200 angeordnet ist. Dadurch ist die Sensoranordnung 100 vor Vandalismus, Staub und weiteren Umwelteinflüssen geschützt.

In Fig. 1b befindet sich ein Objekt 800 in dem Überwachungsbereich. Die Sensoranordnung 100 sendet elektromagnetische Strahlung in den Überwachungsbereich (auch als Überwachungsraum bezeichnet). An dem Objekt 800 kann die elektromagnetische Strahlung reflektiert werden. Die reflektierte elektromagnetische Strahlung kann von der Sensoranordnung 100 empfangen werden. Auf Grundlage der empfangenen elektromagnetischen Strahlung kann das Objekt 800 erkannt werden. Weiterhin kann auf Grundlage der empfangenen elektromagnetischen Strahlung erkannt oder ermittelt werden, wie weit das Objekt 800 von der Sensoranordnung 100 entfernt ist. Ebenso kann auf Grundlage der empfangenen elektromagnetischen Strahlung erkannt oder ermittelt werden, welche Geschwindigkeit das Objekt 800 (relativ zur Sensoranordnung 100) besitzt. Auch kann auf Grundlage der empfangenen elektromagnetischen Strahlung erkannt oder ermittelt werden, in welche Richtung sich das Objekt 800 (relativ zur Sensoranordnung 100) bewegt. Durch zumindest eine oder mehrere dieser Größen lässt sich ermitteln, ob bei einem Schließvorgang der Tür 300, das Objekt 800 (voraussichtlich) eingeklemmt wird. Zumindest lässt sich auf Grundlage einer oder mehrerer der Größen ein Risiko oder eine Wahrscheinlichkeit ermitteln, ob das Objekt 800 eingeklemmt wird.

Wenn ein Einklemmen ermittelt wird oder wenn ein Grenzwert einer Wahrscheinlichkeit eines Einklemmens überschritten wird, kann der Schließvorgang der Tür 300 abgebrochen oder unterbrochen werden. Die Sensoranordnung 100 kann ein Signal erzeugen. Das Signal kann an die Steuerung der Tür 300 übertragen werden. Die Steuerung der Tür 300 kann, veranlasst durch das Signal, die Steuerung der Tür 300 verändern, beispielsweise wie erwähnt den Schließvorgang der Tür abbrechen oder unterbrechen.

Zur Bestimmung oder Ermittlung, ob bei dem Schließvorgang der Tür 300, das Objekt (voraussichtlich) zwischen der Tür 300 und dem Rahmen 500 eingeklemmt wird, kann eine Charakteristik und/oder ein Zustand der Tür 300 einbezogen werden. Ebenso kann zur Bestimmung oder Ermittlung, ob ein Signal zur Veränderung der Steuerung der Tür erzeugt wird, die Charakteristik und/oder der Zustand der Tür 300 einbezogen werden.

Eine Charakteristik der Tür 300 ist beispielsweise eine Schließgeschwindigkeit oder eine Schließkraft der Tür. Wenn die Schließgeschwindigkeit hoch ist, kann ein Einklemmen des Objekts auch bei einer größeren ermittelten Distanz vorausgesagt oder ermittelt werden, als wenn die Schließgeschwindigkeit gering ist. Wenn die Schließkraft hoch ist, kann die Konsequenz (beispielsweise ein Verletzungsrisiko einer Person) eines Einklemmens hoch sein, sodass die Sensoranordnung 100 bereits bei einem geringeren Risiko eines Einklemmens oder bei einer geringeren Wahrscheinlichkeit eines Einklemmens ein Signal für die Steuerung der Tür 300 erzeugt.

Ein Zustand der Tür 300 ist beispielsweise ein Öffnungsgrad der Tür 300. Bei gleicher Distanz und Bewegung eines Objekts 800 zu der Sensoranordnung 100 kann bei einem geringen Öffnungsgrad der Tür 300 ein Einklemmen oder eine höhere Wahrscheinlichkeit eines Einklemmens ermittelt werden als bei einem größeren Öffnungsgrad der Tür 300.

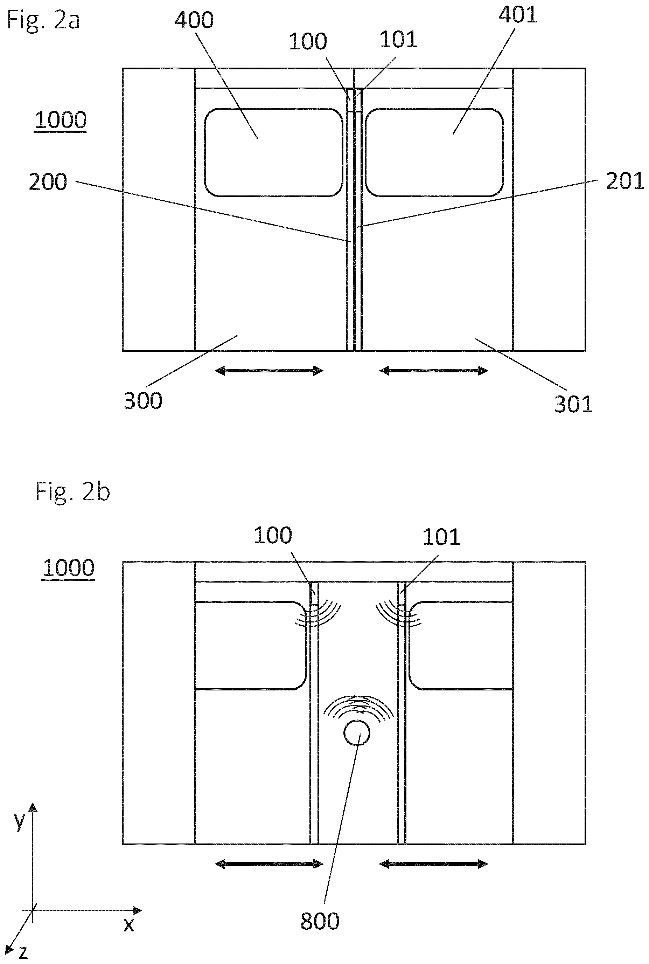

In Fig. 2a ist eine Türanordnung 1000 gezeigt. Die Türanordnung 1000 ist ähnlich der Türanordnung der Figs. 1a und 1b, wobei die Türanordnung 1000 der Fig. 2a zwei Türen 300, 301 umfasst. Jede der Türen 300, 301 kann jede hierin offenbarte Tür sein.

Die Türen 300, 301 können Türen eines Transportmittels sein, beispielsweise eines Zuges oder eines Busses. Die Türen 300, 301 sind zweiflüglig ausgestaltet. Die Türen 300, 301 können als Schiebetüren ausgebildet sein.

Die erste Tür 300 umfasst eine Sicherheitsleiste 200. In der Sicherheitsleiste 200 ist eine Sensoranordnung 100 angeordnet, wie mit Blick auf die Figs. 1a und 1b beschrieben. Die erste Tür 300 kann eine Glas- oder eine Fensterscheibe 400 aufweisen.

Die zweite Tür 301 umfasst eine Sicherheitsleiste 201. In der Sicherheitsleiste 201 ist eine Sensoranordnung 101 angeordnet. Die zweite Tür 301 kann eine Glas- oder eine Fensterscheibe 401 aufweisen. Jede hierin offenbarte Tür kann die zweite Tür 301 sein.

In Fig. 2a sind die Türen 300, 301 geschlossen. In dem geschlossenen Zustand kontaktieren sich die Sicherheitsleisten 200, 201 der ersten und zweiten Tür 300, 301. Durch den Kontakt können beide Sicherheitsleisten (leicht) komprimiert werden.

In Fig. 2b ist die Türanordnung 1000 in einem Zustand mit geöffneten Türen dargestellt. Die Sensoranordnung 100 der ersten Tür 300 und/oder die Sensoranordnung 101 der zweiten Tür 301 senden elektromagnetische Strahlung in einen Überwachungsbereich. In dem Überwachungsbereich kann sich ein Objekt 800 befinden. Von dem Objekt 800 kann die elektromagnetische Strahlung reflektiert werden. Die von dem Objekt 800 reflektierte Strahlung kann von der Sensoranordnung 100 der ersten Tür 300 und/oder von der Sensoranordnung 101 der zweiten Tür 301 empfangen werden. Auf Grundlage der elektromagnetischen Strahlung kann das Objekt erkannt werden, bevorzugt wie mit Blick auf die Figs. 1a und 1b beschrieben. Insbesondere kann die Sensoranordnung 100 der ersten Tür 300 und/oder die Sensoranordnung 101 der zweiten Tür 301 eine Position oder einen Ort, eine Distanz zwischen der jeweiligen Sensoranordnung und dem Objekt, eine Geschwindigkeit des Objekts (relativ zu der jeweiligen Sensoranordnung) und/oder eine Bewegungsrichtung des Objekts (relativ zu der jeweiligen Sensoranordnung) ermitteln oder bestimmen.

Jede der Sensoranordnungen 100, 101 kann ein Signal für eine Steuerung der jeweiligen Tür 300, 301 erzeugen. Auf Grundlage des Signals oder der Signale kann eine Bewegung der jeweiligen Tür 300, 301 verändert werden. Ebenso kann eine Bewegung der ersten und zweiten Tür 300, 301 auf Grundlage des Signals von nur einer der Sensoranordnungen 100, 101 verändert werden.

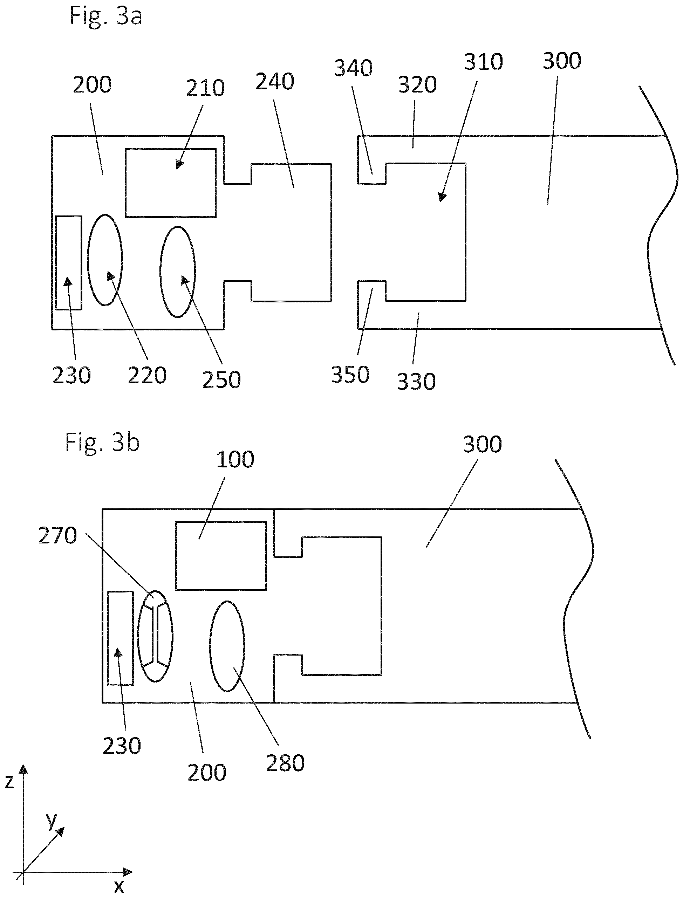

Fig. 3a zeigt einen schematischen Schnitt durch die Sicherheitsleiste 200. Weiterhin zeigt Fig. 3a einen schematischen Schnitt durch einen Abschnitt der Tür 300.

Die Tür 300 kann eine Befestigungsaufnahme 310 umfassen. In der Befestigungsaufnahme 310 kann die Sicherheitsleiste 200 eingesetzt werden, um die Sicherheitsleiste 200 mit der Tür 300 zu verbinden. Die Verbindung kann kraftschlüssig und/oder formschlüssig sein. Die Verbindung kann lösbar sein. Die Tür 300 kann an einer Stirnseite einen ersten Schenkel 320 und einen zweiten Schenkel 330 aufweisen. Auch kann die Tür 300 einen ersten Vorsprung 340 und einen zweiten Vorsprung 350 aufweisen, bevorzugt an der Stirnseite der Tür 300. Zwischen dem ersten Schenkel 320 und dem zweiten Schenkel 330 kann die Befestigungsaufnahme 310 gebildet sein. Der erste Vorsprung 340 und der zweite Vorsprung 350 können einen Formschluss mit der Sicherheitsleiste 200 bewirken, insbesondere in Richtung der Stirnseite, an die die Sicherheitsleiste 200 angebracht ist.

Die Sicherheitsleiste 200 kann einen Befestigungsabschnitt 240 aufweisen. Der Befestigungsabschnitt 240 kann komplementär zu der Befestigungsaufnahme 310 ausgebildet sein. Der Befestigungsabschnitt 240 kann in die Befestigungsaufnahme 310 einschiebbar oder eindrückbar sein, um die Sicherheitsleiste 200 mit der Tür 300 zu verbinden. Der Befestigungsabschnitt 240 kann schwalbenschwanzförmig sein. Die Verbindung zwischen der Sicherheitsleiste 200 und der Tür 300 kann eine Schwalbenschwanzverbindung sein. Die Sicherheitsleiste 200 kann über dessen gesamte Länge mit der Tür 300 verbunden sein.

Die Sicherheitsleiste 200 kann einen ersten Aufnahmeraum 210 aufweisen. Der erste Aufnahmeraum 210 kann sich über die gesamte Länge der Sicherheitsleiste 200 erstrecken. Alternativ kann sich der erste Aufnahmeraum 210 höchstens abschnittsweise über die Länge der Sicherheitsleiste 200 erstrecken. Insbesondere ist der erste Aufnahmeraum 210 zweiseitig oder höchstens einseitig geöffnet, wobei bevorzugt die Öffnung oder die Öffnungen an axialen Enden (in Längsrichtung) vorliegen. Senkrecht zur Längserstreckung der Sicherheitsleiste 200 kann der erste Aufnahmeraum 210 ungeöffnet sein, d.h. keine Öffnung aufweisen oder vollständig von der Sicherheitsleiste 200 oder dem Material der Sicherheitsleiste 200 umgeben sein.

Die Sicherheitsleiste 200 kann einen zweiten Aufnahmeraum 220 aufweisen. Der zweite Aufnahmeraum 220 kann sich über die gesamte Länge der Sicherheitsleiste 200 erstrecken. Alternativ kann sich der zweite Aufnahmeraum 220 höchstens abschnittsweise über die Länge der Sicherheitsleiste 200 erstrecken. Insbesondere ist der zweite Aufnahmeraum 220 zweiseitig oder höchstens einseitig geöffnet, wobei bevorzugt die Öffnung oder die Öffnungen an axialen Enden (in Längsrichtung) vorliegen. Senkrecht zur Längserstreckung der Sicherheitsleiste 200 kann der zweite Aufnahmeraum 220 ungeöffnet sein, d.h. keine Öffnung aufweisen oder vollständig von der Sicherheitsleiste 200 oder dem Material der Sicherheitsleiste 200 umgeben sein.

Die Sicherheitsleiste 200 kann einen dritten Aufnahmeraum 250 aufweisen. Der dritte Aufnahmeraum 250 kann sich über die gesamte Länge der Sicherheitsleiste 200 erstrecken. Alternativ kann sich der dritte Aufnahmeraum 250 höchstens abschnittsweise über die Länge der Sicherheitsleiste 200 erstrecken. Insbesondere ist der dritte Aufnahmeraum 250 zweiseitig oder höchstens einseitig geöffnet, wobei bevorzugt die Öffnung oder die Öffnungen an axialen Enden (in Längsrichtung) vorliegen. Senkrecht zur Längserstreckung der Sicherheitsleiste 200 kann der dritte Aufnahmeraum 250 zumindest eine Öffnung, bevorzugt zumindest zwei oder drei Öffnungen, aufweisen.

Die Sicherheitsleiste 200 kann einen Hohlraum 230 aufweisen. Der Hohlraum 230 kann sich über die gesamte Länge der Sicherheitsleiste 200 erstrecken. Alternativ kann sich der Hohlraum 230 höchstens abschnittsweise über die Länge der Sicherheitsleiste 200 erstrecken. Insbesondere ist der Hohlraum 230 zweiseitig oder höchstens einseitig geöffnet, wobei bevorzugt die Öffnung oder die Öffnungen an axialen Enden (in Längsrichtung) vorliegen. Senkrecht zur Längserstreckung der Sicherheitsleiste 200 kann der Hohlraum 230 zumindest eine Öffnung, bevorzugt zumindest zwei oder drei Öffnungen aufweisen. Senkrecht zur Längserstreckung der Sicherheitsleiste 200 kann der Hohlraum 230 zumindest eine Öffnung, bevorzugt zumindest zwei oder drei Öffnungen, aufweisen. Senkrecht zur Längserstreckung der Sicherheitsleiste 200 kann der Hohlraum 230 ungeöffnet sein, d.h. keine Öffnung aufweisen oder vollständig von der Sicherheitsleiste 200 oder dem Material der Sicherheitsleiste 200 umgeben sein. Ebenso kann der Hohlraum 230 vollständig verschlossen sein, d.h. keine Öffnung aufweisen oder vollständig von der Sicherheitsleiste 200 oder dem Material der Sicherheitsleiste 200 umgeben sein.

In Fig. 3b ist die Sicherheitsleiste 200 in verbundenem Zustand mit der Tür 300 dargestellt. Der Befestigungsabschnitt 240 der Sicherheitsleiste 200 kann in der Befestigungsaufnahme 310 der Tür 300 angeordnet sein.

In dem ersten Aufnahmeraum 210 ist die Sensoranordnung 100 angeordnet. Durch die Ausgestaltung des ersten Aufnahmeraums 210 passiert elektromagnetische Strahlung die Sicherheitsleiste 200 oder das Material der Sicherheitsleiste 200, wenn die Sensoranordnung 100 elektromagnetische Strahlung in den Überwachungsbereich sendet. Der Aufnahmeraum 210 ist insbesondere zwischen einem Befestigungsbereich der Sicherheitsleiste 200 und einem Kontaktbereich der Sicherheitsleiste 200 angeordnet. Somit kann eine sichere Aufnahme der Sensoranordnung 100 sichergestellt werden und die anderen Funktionen der Sicherheitsleiste 200 weiter garantiert werden. Auch kann elektromagnetische Strahlung aus oder von dem Überwachungsbereich die Sicherheitsleiste 200 oder das Material der Sicherheitsleiste 200 passieren, wenn die Sensoranordnung 100 elektromagnetische Strahlung empfängt. Bevorzugt ist der erste Aufnahmeraum 210 so in der Sicherheitsleiste 200 ausgebildet, dass elektromagnetische Strahlung von der Sensoranordnung 100 in den Überwachungsbereich und/oder von dem Überwachungsbereich zu der Sensoranordnung 100 nur (d.h. ausschließlich) das Material der Sicherheitsleiste 200 oder die Sicherheitsleiste 200 passiert. Sind weitere Elemente auf dem Weg der elektromagnetischen Strahlung zwischen der Sensoranordnung 100 und dem Überwachungsbereich angeordnet, könnte ein Teil der elektromagnetischen Strahlung absorbiert und/oder reflektiert werden, wodurch die Messung verfälscht werden könnte.

In dem zweiten Aufnahmeraum 220 kann eine Kontaktleiste 270 angeordnet sein. In Richtung einer Stirnseite der Tür 300 bzw. Kontaktbereich der der Sicherheitsleiste 200, insbesondere der Stirnseite der Tür 300, an die die Sicherheitsleiste 200 angeordnet oder verbunden ist, kann vor dem zweiten Aufnahmeraum 220 der Hohlraum 230 ausgebildet sein. Der Hohlraum 230 vor dem zweiten Aufnahmeraum 220, in dem die Kontaktleiste 270 angeordnet ist, erleichtert eine Verformung der Sicherheitsleiste 200 oder des Materials der Sicherheitsleiste 200. Dadurch kann die Kontaktleiste 270 bei geringerer Kraft auslösen als ohne den Hohlraum 230. Bei einem Auslösen der Kontaktleiste 270 wird zumindest ein Abschnitt der Sicherheitsleiste 200 so komprimiert, dass ein Einklemmen eines Objekts vorliegt oder wahrscheinlich ist. Die Kontaktleiste 270 kann nach einem Auslösen ein Signal an die Steuerung der Tür 300 senden, auf dessen Grundlage die Bewegung der Tür 300 verändert wird, beispielsweise ein Schließvorgang unterbrochen oder abgebrochen wird.

In dem dritten Aufnahmeraum 250 kann eine Lichtgitteranordnung 280 angeordnet sein. Die Lichtgitteranordnung 280 kann so in dem dritten Aufnahmeraum 250 angeordnet sein, dass die Lichtgitteranordnung 280 Licht, bevorzugt in einem nicht von einem Menschen sichtbaren Wellenlängenbereich, in den Überwachungsbereich sendet. An einem der Lichtgitteranordnung 280 gegenüberliegenden Rahmen oder Tür kann ein Empfänger für das Licht vorgesehen sein. Wird der Empfang des Lichtes unterbrochen, beispielsweise durch ein Objekt in dem Überwachungsbereich, kann die Lichtgitteranordnung 280 auslösen. Bei einem Auslösen der Lichtgitteranordnung 280 kann ein Signal an die Steuerung der Tür 300 gesendet werden, auf dessen Grundlage die Bewegung der Tür 300 verändert wird, beispielsweise ein Schließvorgang unterbrochen oder abgebrochen wird.

Die Kontaktleiste 270, die Lichtgitteranordnung 280, der zweite Aufnahmeraum 220, der dritte Aufnahmeraum 250 und/oder der Hohlraum 230 sind optional.

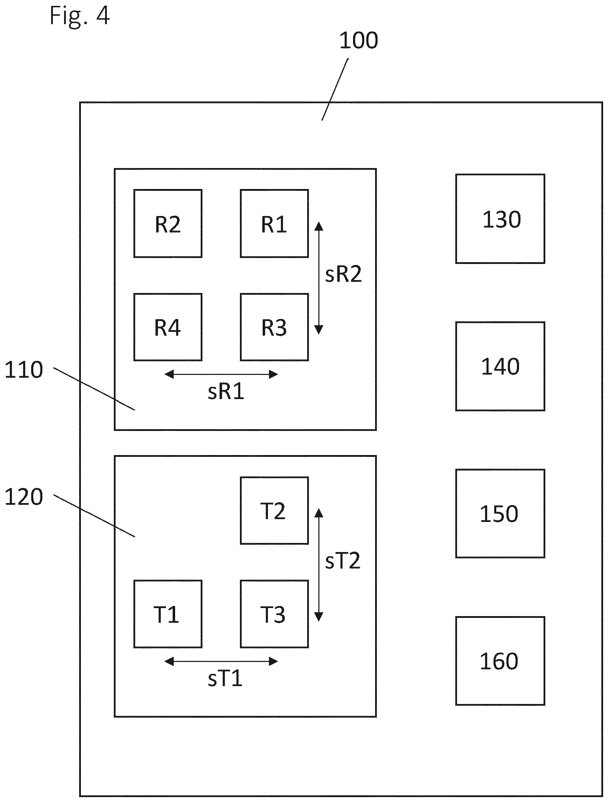

Fig. 4 zeigt schematisch eine Sensoranordnung 100. Die Sensoranordnung 100 kann eine Empfangsanordnung 110 umfassen. Die Empfangsanordnung 110 kann zumindest eine Antenne, bevorzugt zumindest zwei Antennen, bevorzugter zumindest drei Antennen, bevorzugter zumindest vier Antennen, umfassen. Jede der Antennen R1, R2, R3, R4 kann elektromagnetische Strahlung aus oder von dem Überwachungsbereich empfangen.

In der Empfangsanordnung 110 kann zwischen jeweils zwei der Antennen R1, R2, R3, R4 ein Abstand sR1 in einer ersten Richtung zwischen 0,1 bis 0,9 oder von besonders bevorzugt etwa der Hälfte der Wellenlänge der elektromagnetischen Strahlung (etwa 0,5 der Wellenlänge der elektromagnetischen Strahlung) vorliegen. Alternativ oder zusätzlich kann zwischen jeweils zwei der Antennen R1, R2, R3, R4 ein Abstand sR2 in einer zweiten Richtung zwischen 0,1 bis 0,9 oder von besonders bevorzugt etwa der Hälfte der Wellenlänge der elektromagnetischen Strahlung (etwa 0,5 der Wellenlänge der elektromagnetischen Strahlung) vorliegen. Die erste Richtung kann nicht-parallel, insbesondere senkrecht, zu der zweiten Richtung sein.

Die Sensoranordnung 100 kann eine Sendeanordnung 120 umfassen. Die Sendeanordnung 120 kann zumindest eine Antenne, bevorzugt zumindest zwei Antennen, bevorzugter zumindest drei Antennen, umfassen. Jede der Antennen T1, T2, T3 kann elektromagnetische Strahlung in den Überwachungsbereich senden.

In der Sendeanordnung 120 kann zwischen jeweils zwei der Antennen T1, T2, T3 ein Abstand sT1 in einer ersten Richtung zwischen 0,6 und 1,5 oder von besonders bevorzugt etwa ein Mal der Wellenlänge der elektromagnetischen Strahlung (etwa 1,0 ^{∗} der Wellenlänge der elektromagnetischen Strahlung) vorliegen. Alternativ oder zusätzlich kann zwischen jeweils zwei der Antennen T1, T2, T3 ein Abstand sT2 in einer zweiten Richtung zwischen 0,6 und 1,5 oder von besonders bevorzugt etwa ein Mal der Wellenlänge der elektromagnetischen Strahlung (etwa 1,0 der Wellenlänge der elektromagnetischen Strahlung) vorliegen. Die erste Richtung kann nicht-parallel, insbesondere senkrecht, zu der zweiten Richtung sein.

Die Sensoranordnung 100 kann einen Controller 130 umfassen. Der Controller 130 kann eingerichtet sein, die Sensoranordnung 100 zu steuern. Insbesondere ist der Controller 130 eingerichtet, die Sendeanordnung 120 zu steuern. Durch den Controller 130 kann das Senden von elektromagnetischer Strahlung in den Überwachungsbereich steuerbar sein. Insbesondere kann der Controller Signale von einer weiteren Steuerung empfangen, die signalisieren, dass ein Öffnungs- oder Schließvorgang der ein oder mehreren Türen starten und eine Aktivierung der Sensoranordnung 100 erforderlich ist. Der Controller 130 kann eingerichtet sein, Signale der Empfangsanordnung 110 zu bearbeiten und/oder auszuwerten. Der Controller 130 kann alternativ außerhalb der Sensoranordnung 100 vorliegen.

Die Sensoranordnung 100 kann eine Energieversorgungseinrichtung 140 umfassen. Die Energieversorgungseinrichtung 140 kann die Sensoranordnung 100 mit Energie, insbesondere mit elektrischer Energie, versorgen. Die Energieversorgungseinrichtung 140 kann eine Batterie oder einen Akku umfassen. Die Energieversorgungseinrichtung 140 kann eingerichtet sein, elektrische Energie drahtlos zu empfangen, beispielsweise durch Induktion. Alternativ oder zusätzlich kann die Energieversorgungseinrichtung 140 mit einer Energieversorgung, bevorzugt außerhalb der Sicherheitsleiste 200, verbunden sein. Die Verbindung kann eine kontaktbehaftete Verbindung, z.B. eine Verdrahtung, sein.

Die Sensoranordnung 100 kann eine Datenschnittstelle 150 umfassen. Die Datenschnittstelle 150 kann eingerichtet sein, Daten nach außerhalb der Sicherheitsleiste 200 kontaktlos oder kontaktbehaftet zu senden. Alternativ oder zusätzlich kann die Datenschnittstelle 150 eingerichtet sein, Daten von außerhalb der Sicherheitsleiste 200 kontaktlos oder kontaktbehaftet zu empfangen. Insbesondere ist die Datenschnittstelle 150 mit einer Steuerung der Tür verbunden.

Die Sensoranordnung 100 kann einen Speicher 160 umfassen. Der Speicher 160 kann einen flüchtigen und/oder nicht-flüchtigen Speicher umfassen. In dem Speicher 160 können Daten von der Empfangsanordnung 110 gespeichert werden. In dem Speicher 160 kann ein Algorithmus oder mehrere Algorithmen zur Auswertung von Daten in dem Speicher 160, insbesondere von Daten der Empfangsanordnung 110 gespeichert sein.

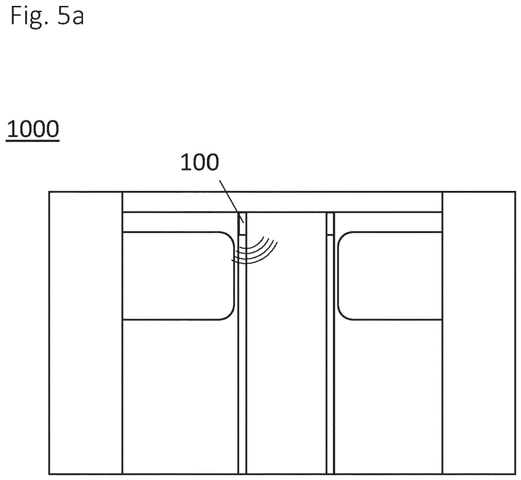

Die Figs. 5a bis 5d zeigen eine Messung der Sensoranordnung 100 einer Türanordnung 1000. In Fig. 5a ist zumindest eine Tür, insbesondere beide Türen, geöffnet. Die Sensoranordnung 100 sendet elektromagnetische Wellen in den Überwachungsbereich und empfängt elektromagnetische Strahlung aus oder von dem Empfangsbereich. In dem Überwachungsbereich befindet sich kein (zu detektierendes) Objekt.

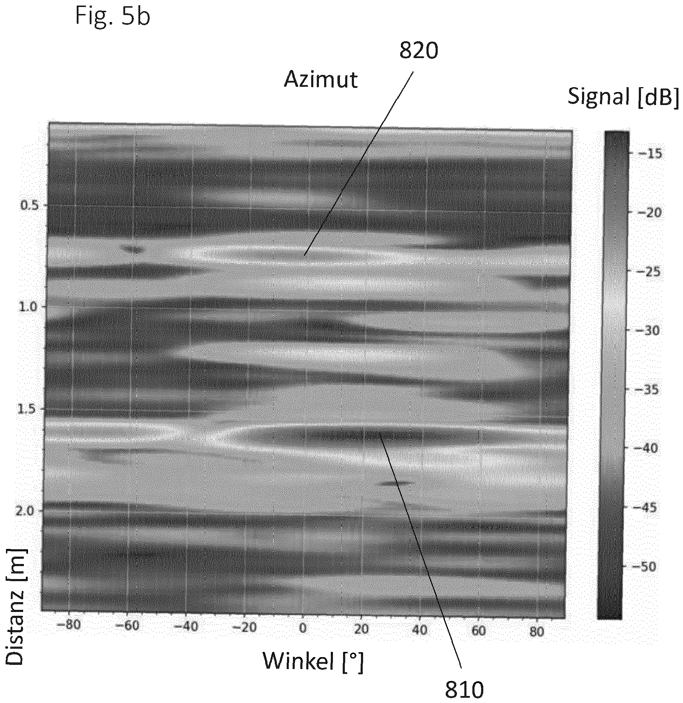

Die Messung ist in den Figs. 5b bis 5c visualisiert. Fig. 5b zeigt eine Darstellung auf Grundlage der empfangenen elektromagnetischen Strahlung. Dabei ist ein Winkel in Grad (°) gegen eine Distanz in Meter (m) aufgetragen. Unterschiedliche Signalintensitäten in Dezibel (dB) sind durch unterschiedlich farbige Bereiche bzw. durch unterschiedliche Schattierungen dargestellt. In Fig. 5b ist der Winkel ein Azimut-Winkel.

In Fig. 5b sind mehrere Bereiche mit relativ hoher Signalintensität erkennbar. Diese Bereiche werden durch Reflexionen der elektromagnetischen Strahlung, ausgesendet von der Sensoranordnung 100, hervorgerufen. Beispielsweise ist bei einer Distanz von etwa 1,6 m über einen Azimut-Winkelbereich von etwa -20 ° bis über 80 ° ein Bereich 810 mit hoher Signalintensität gebildet. Dieser Bereich kann durch eine Reflexion der elektromagnetischen Strahlung am Boden der Tür, beispielsweise an einem Boden eines Busses oder eines Zuges, verursacht werden. Weiterhin ist bei einer Distanz von etwa 0,7 m über einen Azimut-Winkelbereich von etwa -40 ° bis etwa 30 ° ein Bereich 820 mit hoher Signalintensität gebildet. Dieser Bereich kann durch eine Reflexion der elektromagnetischen Strahlung an einem Halteelement, z.B. an einer Haltestange, im Türbereich verursacht werden.

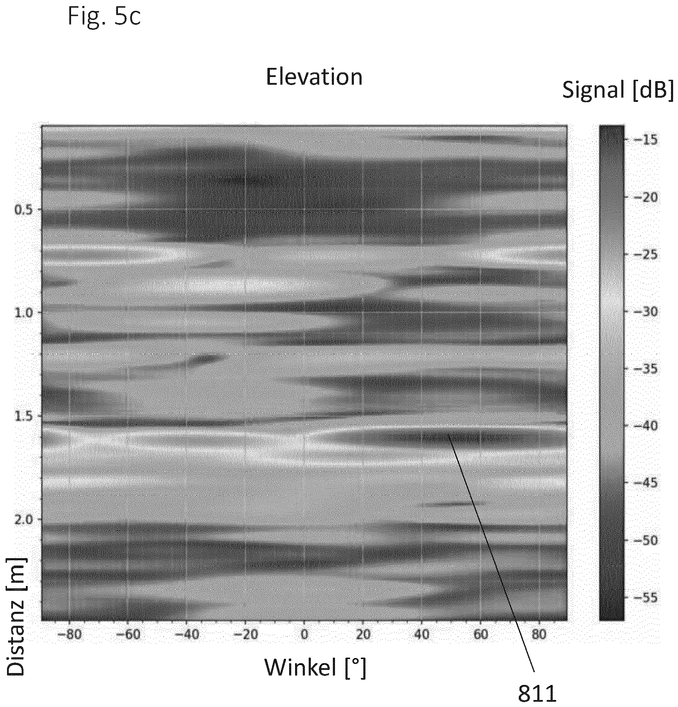

Fig. 5c zeigt eine ähnliche Darstellung wie Fig. 5b, wobei in Fig. 5c der Winkel ein Elevation-Winkel ist. In Fig. 5c sind wiederum mehrere Bereiche mit höherer Signalintensität ersichtlich. Beispielsweise bei einer Distanz von etwa 1,6 m und einem Elevation-Winkelbereich von etwa 0 ° bis über 80 ° ist ein Bereich 811 mit hoher Signalintensität gebildet. Dieser Bereich kann wiederum durch eine Reflexion der elektromagnetischen Strahlung am Boden der Tür verursacht werden.

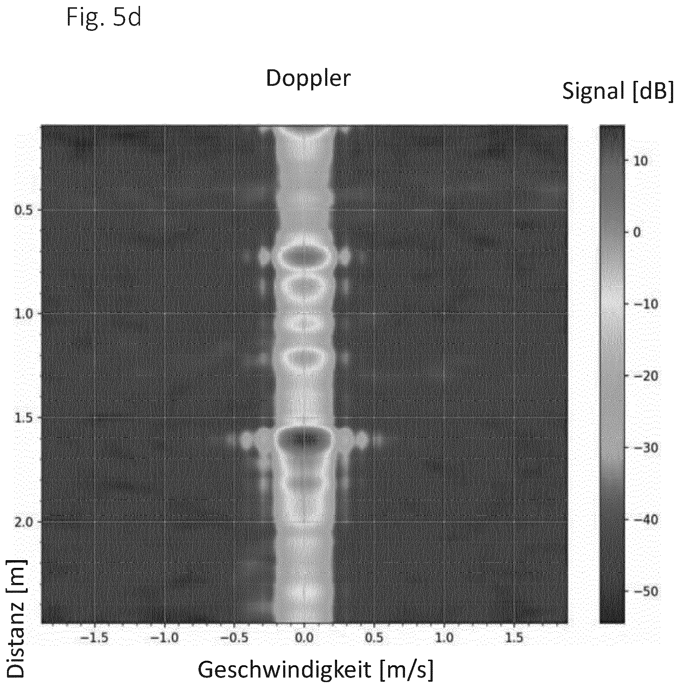

In Fig. 5d ist eine ähnliche Darstellung wie in den Figs. 5b und 5c gezeigt, wobei in Fig. 5d die Geschwindigkeit in Meter pro Sekunde (m/s) gegen die Distanz in Meter (m) aufgetragen ist. Die Darstellung ist mit "Doppler" gekennzeichnet, da die Geschwindigkeitsmessung auf dem Doppler-Effekt beruht. In dem Szenario der Fig. 5a sind lediglich geringe Geschwindigkeiten (negative und positive Geschwindigkeiten) sichtbar.

Die Signale, wie in den Figs. 5b bis 5d gezeigt, können als Hintergrund angesehen werden. Wenn sich kein zu detektierendes Objekt 800 in dem Überwachungsbereich befindet, der Überwachungsbereich also frei von zu detektierenden Objekten 800 ist, ergibt sich eine Messung durch die Sensoranordnung 100 wie in den Figs. 5b bis 5d gezeigt. Der Hintergrund kann bei einer weiteren Messung abgezogen oder bei einer weiteren Messung berücksichtigt werden, um die Erkennung von zu detektierenden Objekten zu verbessern. Der Hintergrund kann kein zu detektierendes Objekt sein.

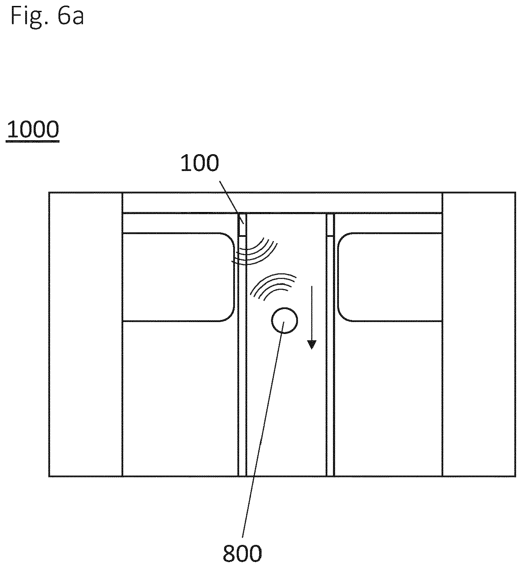

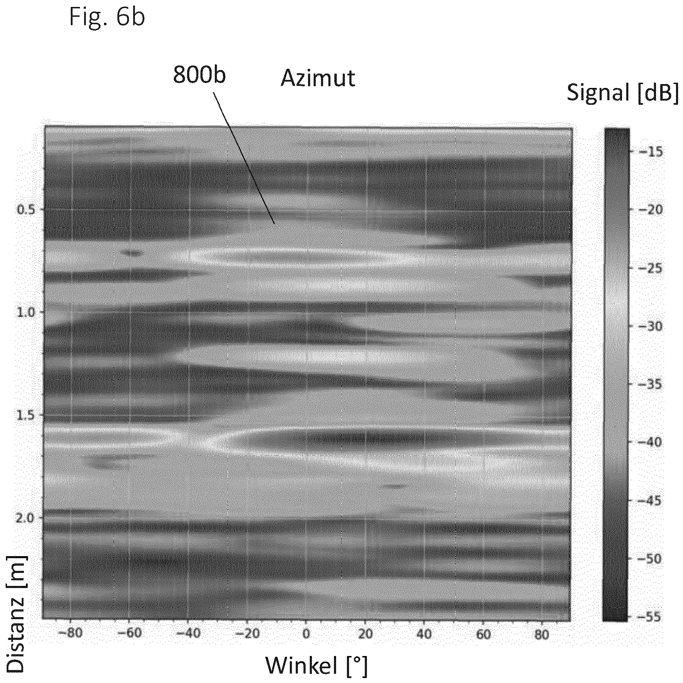

Die Figs. 6a bis 6d zeigen eine Messung der Sensoranordnung 100, wobei sich ein zu detektierendes Objekt 800 in dem Überwachungsbereich befindet. Das Objekt 800 bewegt sich von der Sensoranordnung 100 weg. In der Darstellung der Fig. 6b ist ein gegenüber der Darstellung der Fig. 5b zusätzlicher Bereich 800b mit höherer Signalintensität erkennbar. Der Bereich 800b ist bei einer Distanz von etwa 0,6 m und einem Azimut-Winkelbereich von etwa -25 ° bis etwa 0 ° gebildet. Dieser Bereich 800b wird durch eine Reflexion der elektromagnetischen Strahlung an dem zu detektierenden Objekt 800 hervorgerufen.

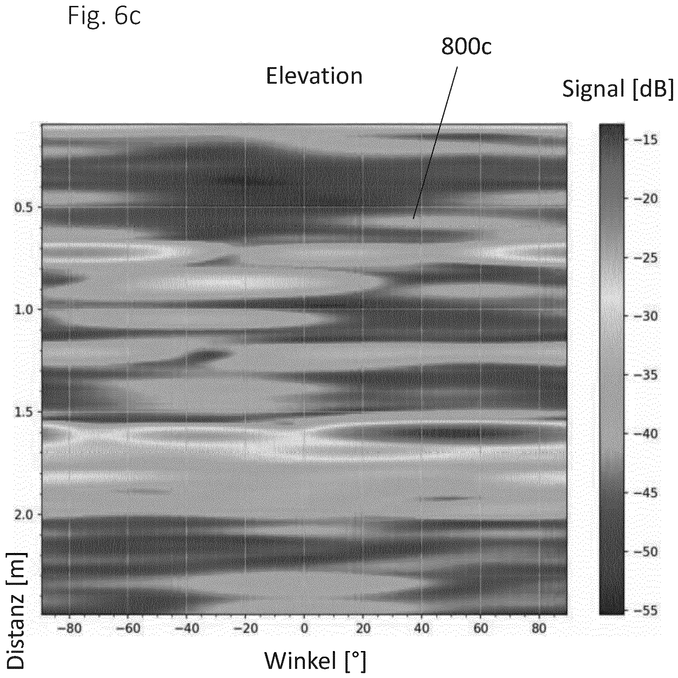

Analog ist in Fig. 6c ein gegenüber der Darstellung der Fig. 5c zusätzlicher Bereich 800b ersichtlich. Dieser Bereich ist bei einer Distanz von etwa 0,6 m und einem Elevation-Winkel von etwa 0 ° bis etwa 60 ° gebildet. Der Bereich 800c wird wiederum durch eine Reflexion der elektromagnetischen Strahlung an dem zu detektierenden Objekt 800 verursacht.

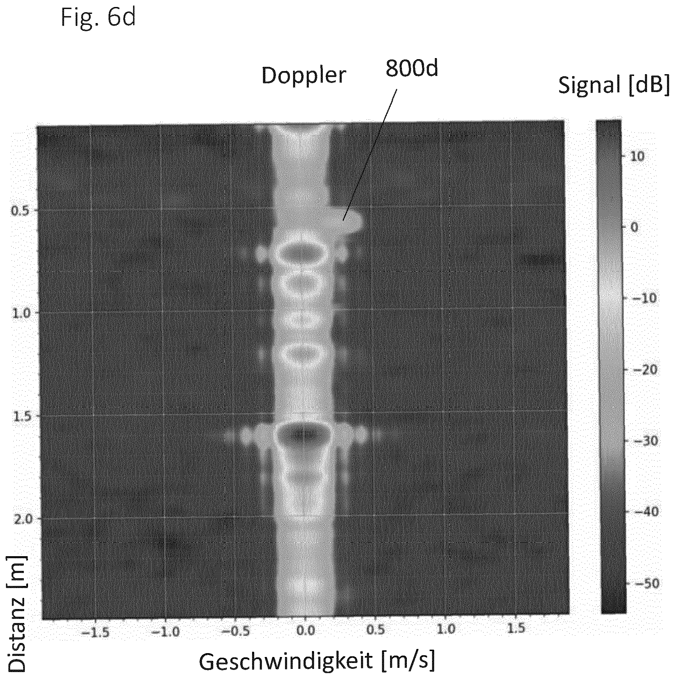

In Fig. 6d ist bei einer Distanz von etwa 0,6 m und einer Geschwindigkeit von etwa 0,5 m/s ein Bereich 800d mit erhöhter Signalintensität gebildet, der auf der Reflexion der elektromagnetischen Strahlung von dem zu detektierenden Objekt 800 beruht. Die positive Geschwindigkeit gibt an, dass sich das Objekt 800 von der Sensoranordnung 100 wegbewegt.

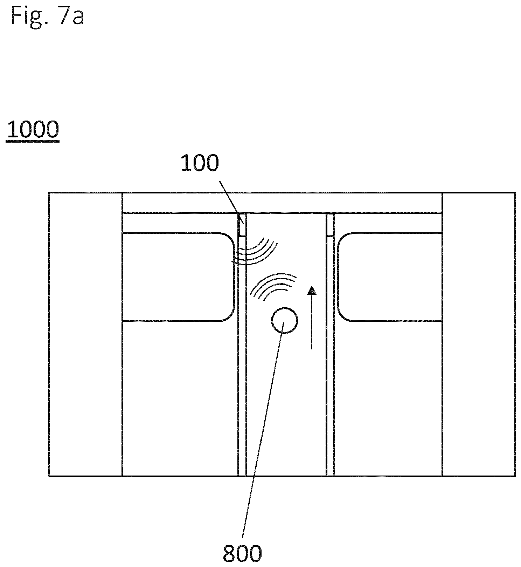

Die Figs. 7a bis 7d zeigen eine Messung der Sensoranordnung 100, wobei sich ein zu detektierendes Objekt 800 in dem Überwachungsbereich befindet. Das Objekt 800 bewegt sich in Richtung der Sensoranordnung 100, d.h., dass sich das Objekt 800 auf die Sensoranordnung 100 zu bewegt.

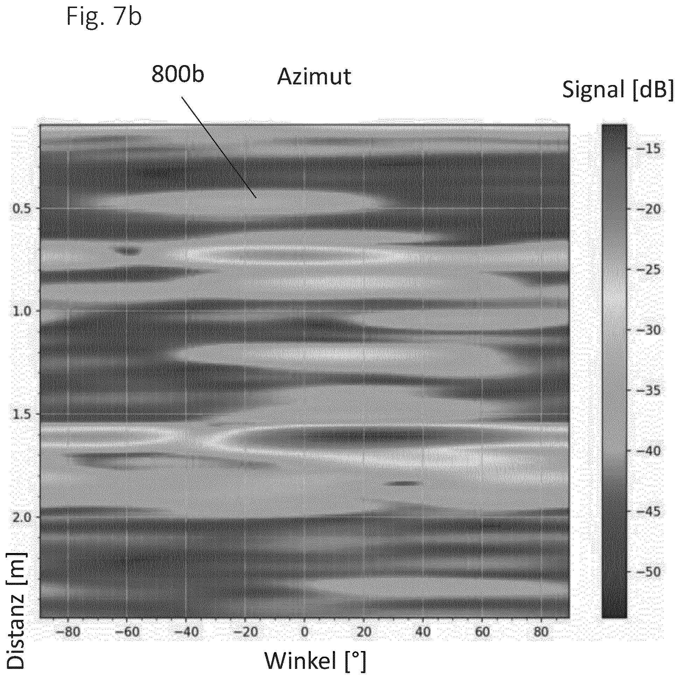

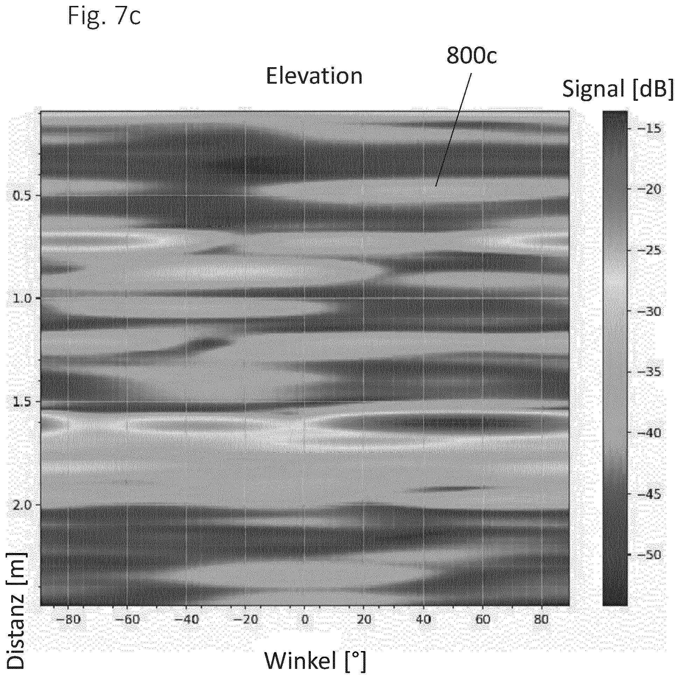

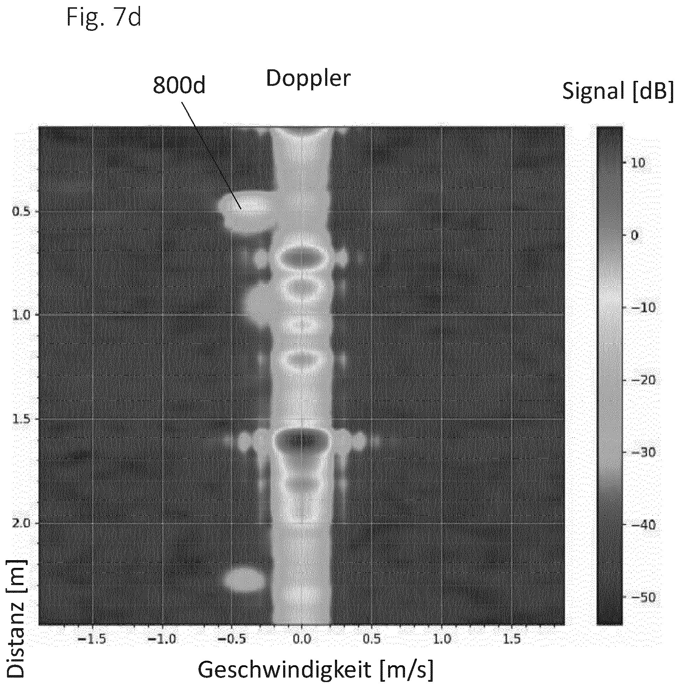

In Fig. 7b ist ein Bereich 800b bei einer Distanz von etwa 0,4 m und einem Azimut-Winkelbereich von etwa -60 ° bis etwa 20 °, in Fig. 7c ist ein Bereich 800c bei einer Distanz von etwa 0,4 m und einem Elevation-Winkelbereich von etwa 0 ° bis über 80 ° und in Fig. 7d ist ein Bereich 800d bei einer Distanz von etwa 0,4 m und einer Geschwindigkeit von etwa -0,5 m/s erkennbar. Die Bereiche 800b, 800c und 800d werden durch das zu detektierende Objekt verursacht. Die negative Geschwindigkeit gibt an, dass sich das zu detektierende Objekt 800 in Richtung der Sensoranordnung 100 bewegt, also auf die Sensoranordnung 100 zu bewegt.

Aus der Messung der Sensoranordnung 100 kann der Ort eines Objekts 800, eine Distanz des Objekts 800 zu der Sensoranordnung 100, eine Geschwindigkeit des Objekts 800 relativ zu der Sensoranordnung 100 und/oder eine Bewegungsrichtung des Objekts relativ zu der Sensoranordnung 100 ermittelt werden. Dadurch lässt sich ein Überwachungsbereich besonders gut überwachen.

Grundsätzlich kann die Messung mit den folgenden Schritten durchgeführt werden. Der Controller kann eingerichtet sein, die folgenden Schritte auszuführen. Einer oder mehrere der Schritte können optional sein.

Durch die Sensoranordnung kann elektromagnetische Strahlung, bevorzugt in einem breiten Raumwinkelbereich, mit zumindest einer Antenne (Sendeantenne) ausgesendet werden. Der Raumwinkelbereich kann zumindest 30 °, zumindest 45 °, zumindest 60 °, zumindest 75 ° oder zumindest 90 ° sein.

Durch die Sensoranordnung kann reflektierte elektromagnetische Strahlung mit zumindest zwei Antennen (Empfangsantennen) empfangen werden. Jede der Antennen kann eine Sendeantenne und/oder eine Empfangsantenne sein.

Eine Signalvorbereitung kann auf die empfangene elektromagnetische Strahlung, insbesondere auf ein Signal, das auf der empfangenen elektromagnetischen Strahlung basiert, angewendet werden. Die Signalvorbereitung kann eine oder mehrere Filter umfassen. Das Signal kann die Gesamtheit aller Größen umfassen, z.B. für verschiedene Empfangsantennen.

Das empfangene Signal kann nach Zwischeninformationen aufgelöst werden. Zwischeninformationen sind z.B. Distanzen, Winkel, Geschwindigkeiten und/oder Signalstärken und/oder weitere möglicherweise abstrahierte Größen. Die Größen können eine anschließende Klassifikation von Objekten hin z.B. auf ihren Typ, Zustand und/oder ihre Relevanz und/oder weiteren Klassen erlauben. Beispielhafte Größen sind "Typ", "Zustand" und/oder "Relevanz" und/oder die weiteren Klassen. Die Klassen können in zumindest zwei Unterklassen eingeteilt werden. Beispielsweise kann "Typ" eingeteilt werden in z.B. ["Person", "Tür"] oder z.B. "Zustand" kann eingeteilt werden in z.B. ["bewegt sich auf Tür zu", "bewegt sich von Tür weg", "bewegt sich nicht"] oder z.B. "Relevanz" kann eingeteilt werden in z.B. ["relevant", "nicht relevant"].

Das Anwendungsszenario und/oder die Klassifikation von Objekten in dem Szenario kann analysiert werden, beispielsweise auf Basis der generierten direkten und/oder abstrahierten Zwischeninformationen aus dem vorherig beschriebenen Schritt. Das Szenario kann anschließend interpretiert werden. Ein das Szenario beschreibendes Signal kann ausgelöst werden, beispielsweise durch den Controller. Das Signal kann z.B. bei der Überwachung einer sich schließenden Tür und einer sich nähernden Person ein Signal sein, dass zum Abbruch des Schließvorgangs der Tür genutzt werden kann. Das Szenario kann algorithmische interpretiert werden. Für die Interpretation des Szenarios kann ein Algorithmus eingesetzt werden, der von Daten lernt. Insbesondere kann maschinelles Lernen, beispielsweise supervised machine learning, unsupervised machine learning, reinforcement learning zum Lernen eingesetzt werden.

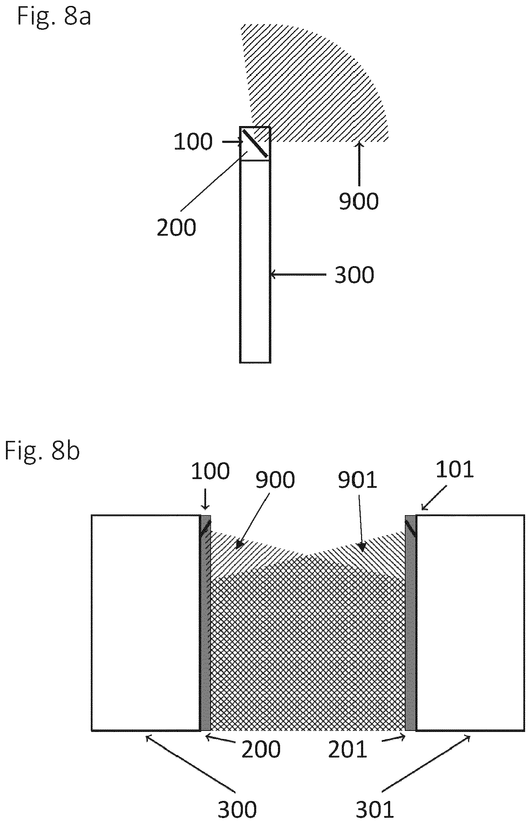

Fig. 8a zeigt eine Tür 300 mit einer Sicherheitsleiste 200. Eine Sensoranordnung 100 ist in der Sicherheitsleiste 200 angeordnet. Die Tür 300 ist in Fig. 8a in einer schematischen Draufsicht gezeigt. Die Draufsicht zeigt die Tür in einer Ebene senkrecht zur Gravitationsrichtung bzw. parallel zu einem Boden.

Wenn die Sensoranordnung 100 elektromagnetische Strahlung sendet, ergibt sich ein Überwachungsbereich 900. Die Sensoranordnung 100 kann so ausgestaltet sein, dass die elektromagnetische Strahlung in einem großen Raumwinkel oder Raumwinkelbereich ausgesendet wird. Dadurch lässt sich ein Eingangs- und/oder Ausgangsbereich besonders gut überwachen, da der Überwachungsbereich relativ groß ist. Der Raumwinkel oder Raumwinkelbereich kann zumindest 30 °, zumindest 45 °, zumindest 60 °, zumindest 75 ° oder zumindest 90 ° sein. Der Raumwinkel oder Raumwinkelbereich kann sich senkrecht zur Gravitationsrichtung bzw. parallel zum Boden erstrecken.

In Fig. 8b ist eine zweiflüglige Türanordnung gezeigt. Die Türanordnung ist in einer seitlichen Ansicht gezeigt. Die seitliche Ansicht kann senkrecht zum Boden bzw. parallel zur Gravitationsrichtung orientiert sein.

Eine erste Tür 300 umfasst eine Sicherheitsleiste 200. Die Sicherheitsleiste 200 der ersten Tür 300 umfasst eine Sensoranordnung 100. Eine zweite Tür 301 umfasst eine Sicherheitsleiste 201. Die Sicherheitsleiste 201 der zweiten Tür 301 umfasst eine Sensoranordnung 101.

Die Sensoranordnung 100 der ersten Tür 300 und die Sensoranordnung der zweiten Tür 301 können elektromagnetische Strahlung in einen jeweiligen Überwachungsbereich 900, 901 senden. Jede der Sensoranordnungen 100, 101 kann elektromagnetische Strahlung in den Überwachungsbereich in einem großen Raumwinkel oder Raumwinkelbereich senden. Der Raumwinkel oder Raumwinkelbereich kann zumindest 30 °, zumindest 45 °, zumindest 60 ° oder zumindest 75 ° sein. Der Raumwinkel oder Raumwinkelbereich kann sich in Gravitationsrichtung bzw. senkrecht zum Boden erstrecken.

Zumindest einer der Überwachungsbereiche 900, 901 oder jeder der Überwachungsbereiche 900, 901 kann sich über eine Höhe von zumindest 30 %, bevorzugt zumindest 50 %, bevorzugter zumindest 70 %, bevorzugter zumindest 80 %, der Gesamthöhe oder Gesamtlänge der jeweiligen Sicherheitsleiste 200, 201 erstrecken.

Ein Überwachungsbereich 900, 901 kann sich von der Sicherheitsleiste 200, 201, in der die zugehörige Sensoranordnung 100, 101 angeordnet ist, bis zu einem gegenüberliegenden Rahmen oder einer gegenüberliegenden Tür erstrecken.

### BEZUGSZEICHENLISTE

- 100, 101: Sensoranordnung
- 110: Empfangsanordnung
- R1, R2, R3, R4: Antenne
- sR1, sR2: Abstand
- 120: Sendeanordnung
- T1, T2, T3: Antenne
- sT1, sT2: Abstand
- 130: Controller
- 140: Energieversorgungseinrichtung
- 150: Datenschnittstelle
- 160: Speicher
- 200, 201: Sicherheitsleiste
- 210: Aufnahmeraum
- 220: Aufnahmeraum
- 230: Hohlraum
- 240: Befestigungsabschnitt
- 250: Aufnahmeraum
- 270: Kontaktleiste
- 280: Lichtgitteranordnung
- 300, 301: Tür
- 310: Befestigungsaufnahme
- 320: Schenkel
- 330: Schenkel
- 340: Vorsprung
- 350: Vorsprung
- 400, 401: Fenster
- 500: Rahmen
- 800: Objekt
- 810, 811, 820: Bereich
- 800b, 800c, 800d: Bereich
- 900, 901: Überwachungsbereich
- 1000: Türanordnung

## Patentansprüche

1. Sicherheitsleiste (200, 201) für eine Tür (300, 301), insbesondere für eine Tür (300, 301) eines Transportmittels, wobei:
- die Sicherheitsleiste (200, 201) elastisch und/oder flexibel ist, zumindest einen Aufnahmeraum (210) aufweist und eine Sensoranordnung (100, 101) umfasst;
- die Sensoranordnung (100, 101) eingerichtet ist, elektromagnetische Strahlung in einen Überwachungsbereich (900, 901) zu senden und von dem Überwachungsbereich (900, 901) zu empfangen; und
- die Sensoranordnung (100, 101) so in dem Aufnahmeraum (210) angeordnet ist, dass die Sicherheitsleiste (200, 201) die Sensoranordnung (100, 101) zumindest in einer Ebene vollständig umschließt.

2. Sicherheitsleiste nach Anspruch 1, wobei die Sensoranordnung (100, 101) so in dem Aufnahmeraum (210) angeordnet ist, dass zumindest 25 %, bevorzugt zumindest 50 %, bevorzugter zumindest 75 %, bevorzugter zumindest 90 %, bevorzugter zumindest 95 %, der Oberfläche der Sensoranordnung (100, 101) von der Sicherheitsleiste (200, 201) umgeben ist, insbesondere wobei die Sensoranordnung (100, 101) im Wesentlichen vollständig von der Sicherheitsleiste (200, 201) umgeben ist.

3. Sicherheitsleiste nach Anspruch 1 oder 2, wobei:
- die Sensoranordnung (100, 101) eine RADAR-Sensoranordnung ist, insbesondere eine FMCW-RADAR-Sensoranordnung, eine CW-RADAR-Sensoranordnung, eine M-Sequenz-RADAR-Sensoranordnung oder eine Impulsmodulations-RADAR-Sensoranordnung ist; und/oder
- die elektromagnetische Strahlung eine Frequenz zwischen 30 kHz und 3000 GHz, bevorzugt zwischen 1 MHz und 3000 GHz, bevorzugter zwischen 1 MHz und 300 GHz, bevorzugter zwischen 6 MHz und 300 GHz, bevorzugter zwischen 1 GHz und 300 GHz, bevorzugter zwischen 59 GHz und 62 GHz, aufweist.

4. Sicherheitsleiste nach einem der vorhergehenden Ansprüche, wobei die Sensoranordnung (100, 101) zumindest eine Antenne (T1, T2, T3; R1, R2, R3, R4) umfasst, wobei die Antenne (T1, T2, T3; R1, R2, R3, R4) eingerichtet ist, elektromagnetische Strahlung in den Überwachungsbereich (900, 901) zu senden und/oder von dem Überwachungsbereich zu empfangen; bevorzugt wobei die Sensoranordnung (100, 101) zumindest eine erste Antenne (T1, T2, T3) und zumindest eine zweite Antenne (R1, R2, R3, R4) umfasst, wobei die erste Antenne (T1, T2, T3) eingerichtet ist, elektromagnetische Strahlung in den Überwachungsbereich (900, 901) zu senden, und die zweite Antenne (R1, R2, R3, R4) eingerichtet ist, elektromagnetische Strahlung von dem Überwachungsbereich (900, 901) zu empfangen, insbesondere wobei die Sensoranordnung (100, 101) zumindest eine erste Antenne (T1, T2, T3) und zumindest zwei zweite Antennen (R1, R2, R3, R4) umfasst.

5. Sicherheitsleiste nach einem der vorhergehenden Ansprüche, wobei die Sicherheitsleiste (200, 201) einen Befestigungsabschnitt (240) aufweist, durch den die Sicherheitsleiste (200, 201) mit der Tür (300) kraftschlüssig und/oder formschlüssig verbindbar ist.

6. Sicherheitsleiste nach einem der vorhergehenden Ansprüche, wobei die Sicherheitsleiste (200, 201) eine um ein Vielfaches größere Länge als Breite aufweist und wobei die Sensoranordnung (200, 201) von einem Ende der Sicherheitsleiste (200, 201) in Längsrichtung höchstens 30 %, bevorzugt höchstens 20 %, bevorzugter höchstens 10 %, der Gesamtlänge der Sicherheitsleiste (200, 201) entfernt angeordnet ist.

7. Sicherheitsleiste nach einem der vorhergehenden Ansprüche, wobei die Sicherheitsleiste (200, 201), insbesondere die Sensoranordnung (100, 101), einen Controller (130) umfasst, wobei der Controller (130) eingerichtet ist, auf Grundlage der empfangenen elektromagnetischen Strahlung zu ermitteln, ob sich mindestens ein Objekt (800) in dem Überwachungsbereich (900, 901) befindet.

8. Sicherheitsleiste nach Anspruch 7, wobei der Controller (130) eingerichtet ist, ein auf der empfangenen elektromagnetischen Strahlung basierendes Signal zu bearbeiten, zu verarbeiten und/oder auszuwerten, insbesondere einen oder mehrere Filter auf das Signal anzuwenden.

9. Sicherheitsleiste nach Anspruch 7 oder 8, wobei der Controller (130) eingerichtet ist, einen Ort und/oder eine Geschwindigkeit und/oder eine Bewegungsrichtung des Objekts (800) auf Grundlage der empfangenen elektromagnetischen Strahlung in dem Überwachungsbereich (900, 901) und/oder auf Grundlage des bearbeiteten, verarbeiteten und/oder ausgewerteten Signals zu ermitteln.

10. Sicherheitsleiste nach einem der Ansprüche 7 bis 9, wobei der Controller (130) eingerichtet ist, das Objekt (800) auf Grundlage der elektromagnetischen Strahlung und/oder auf Grundlage des bearbeiteten, verarbeiteten und/oder ausgewerteten Signals zu klassifizieren.

11. Sicherheitsleiste nach einem der Ansprüche 7 bis 10, wobei der Controller (130) eingerichtet ist, das Objekt (800) auf Grundlage der elektromagnetischen Strahlung und/oder auf Grundlage des bearbeiteten, verarbeiteten und/oder ausgewerteten Signals zu separieren.

12. Sicherheitsleiste nach einem der Ansprüche 7 bis 11, wobei der Controller (130) eingerichtet ist, auf Grundlage der elektromagnetischen Strahlung und/oder auf Grundlage des bearbeiteten, verarbeiteten und/oder ausgewerteten Signals und/oder auf Grundlage der Klassifikation und/oder auf Grundlage eines Zustands der Tür (300, 301) ein Signal zu erzeugen, durch das ein Betrieb der Tür (300, 301) veränderbar ist, bevorzugt durch das eine Bewegung der Tür (300, 301) veränderbar ist, bevorzugt durch das ein Schließvorgang der Tür (300, 301) unterbrechbar.

13. Verfahren zum Betreiben einer Sicherheitsleiste (200, 201) für eine Tür (300, 301), insbesondere für eine Tür (300, 301) eines Transportmittels, wobei die Sicherheitsleiste (200, 201) eine Sensoranordnung (100, 101) umfasst, die in einem Aufnahmeraum (210) der Sicherheitsleiste (200, 201) angeordnet ist und zumindest in einer Ebene vollständig von der Sicherheitsleiste (200, 201) umschlossen ist, das Verfahren mit den Schritten:
- Senden, durch die Sensoranordnung (200, 201), von elektromagnetischer Strahlung in einen Überwachungsbereich (900, 901);
- Empfangen, durch die Sensoranordnung (200, 201), von elektromagnetischer Strahlung von dem Überwachungsbereich (900, 901); und
- Ermitteln, auf Grundlage der empfangenen elektromagnetischen Strahlung, ob sich ein Objekt (800) in dem Überwachungsbereich (900, 901) befindet.

14. Tür (300, 301) mit einer Sicherheitsleiste (200, 201) nach einem der Ansprüche 1 bis 12.

15. Transportmittel mit zumindest einer Tür (300, 301) nach Anspruch 14, insbesondere mit zwei Türen (300, 301) nach Anspruch 14.
